# EUROPÄISCHE PATENTSCHRIFT

(11) **EP 4 256 211 B1**
(45) Veröffentlichungstag und Bekanntmachung des Hinweises auf die Patenterteilung: **07.05.2025**
(21) Anmeldenummer: 21827383.7
(22) Anmeldetag: 29.11.2021
(51) Int. Cl.: F16C 27/02, F16C 27/06, B62K 21/08, F16F 9/14

(54) **LAGEREINHEIT, VERFAHREN ZUM EINSATZ UND FUNKTIONSBEEINFLUSSUNG EINER LAGEREINHEIT SOWIE SCHWINGUNGSDÄMPFER UND VERFAHREN ZUM EINSATZ UND FUNKTIONSBEEINFLUSSUNG EINES SCHWINGUNGSDÄMPFERS**
BEARING UNIT, METHOD FOR USING AND FUNCTIONALLY INFLUENCING A BEARING UNIT, AND VIBRATION DAMPER AND METHOD FOR USING AND FUNCTIONALLY INFLUENCING A VIBRATION DAMPER
ENSEMBLE PALIER, PROCÉDÉ POUR UTILISER ET INFLUER SUR LE FONCTIONNEMENT D'UN ENSEMBLE PALIER ET AMORTISSEUR DE VIBRATIONS ET PROCÉDÉ POUR UTILISER ET INFLUER SUR LE FONCTIONNEMENT D'UN AMORTISSEUR DE VIBRATIONS

(30) Priorität: 07.12.2020 DE 102020132451; 19.03.2021 DE 102021106809
(43) Veröffentlichungstag der Anmeldung: 11.10.2023
(73) Patentinhaber: HWG Horst Weidner GmbH, 71272 Renningen (DE)
(72) Erfinder: BREITFELD, Sven, 71106 Magstadt (DE)
(74) Vertreter: Patentanwälte Schuster, Müller & Partner mbB
(86) Internationale Anmeldenummer: PCT/DE2021/100943
(87) Internationale Veröffentlichungsnummer: WO 2022/122074

(56) Entgegenhaltungen:
- EP-A1- 0 225 982
- EP-A1- 3 666 633
- EP-A2- 2 706 256
- WO-A1-2014/163434
- CN-A- 108 916 291
- DE-A1- 102013 106 899
- DE-B- 1 269 842
- GB-A- 2 368 826
- GB-A- 760 150
- JP-A- H11 129 968
- KR-A- 20140 120 725
- US-A- 5 720 370
- US-A- 5 927 740
- US-A1- 2011 241 301
- US-A1- 2014 102 840

## Beschreibung

### Stand der Technik

Die Erfindung geht aus von einer Lagereinheit, nach der Gattung des Anspruchs 1, einem Verfahren zum Einsatz einer Lagereinheit, nach der Gattung des Anspruchs 11, einem Verfahren zur Funktionsbeeinflussung einer Lagereinheit, nach der Gattung des Anspruchs 14, einem Schwingungsdämpfer, nach der Gattung des Anspruchs 16, einem Verfahren zum Einsatz eines Schwingungsdämpfers, nach der Gattung des Anspruchs 28, und einem Verfahren zur Funktionsbeeinflussung eines Schwingungsdämpfers, nach der Gattung des Anspruchs 31. Insbesondere geht die Erfindung aus von einem Schwingungsdämpfer und/oder einem integriertem Lenkanschlag für Lenker von Zwei- und Dreiradfahrzeugen, der in einer Steuerkopflagerung des Fahrzeugs integriert ist.

Das klassische Fahrrad wird zunehmend durch motorisierte E-Bikes ersetzt. Die Motorisierung des Fahrrads dient der Unterstützung der Muskelkraft, wodurch ein klares Unterscheidungsmerkmal zum Motorrad besteht. Verglichen mit dem klassischen Fahrrad bestehend bei der Entwicklung moderner E-Bikes zusätzliche Anforderungen. Beispielsweise erfordert die Anbringung des Akkus und Motors stabilere Rahmen. Durch diese zusätzlichen Bauteile und der dadurch massiveren Gestaltung der Rahmen ist das Gewicht eines E-Bikes höher als das Gewicht eines klassischen Fahrrads.

Das erhöhte Gewicht des Fahrrads führt zu einem unerwünschten physikalischen Effekt, der insbesondere bei schweren E-Bikes auftritt: Das sogenannte Lenkerflatter, auch "Shimmy-Effekt" genannt.

Das Lenkerflattern ist ein physikalischer Effekt, der auch heute noch nicht rechnerisch bestimmt werden kann. Einflussgrößen auf diesen Effekt sind Rahmengewicht, Rahmensteifigkeit, Achsabstand, Schwerpunktlage, Gesamtgewicht, Reifenluftdruck etc.. Ein konstruktives Vermeiden dieses Effektes ist unmöglich, durch geeignete Maßnahmen kann der Effekt jedoch reduziert werden. Beispielsweise sind Damen-Fahrräder häufiger von dem Lenkerflattern betroffen, da die Tiefeinsteiger-Rahmengeometrie eine geringere Rahmen-Steifigkeit besitzt als ein Herrenrad. Das Lenkerflattern äußert sich in einer ungewollten Links-Rechts-Bewegung des Lenkers während einer Geradeaus-Fahrt. Hierbei kommt es auch zu Unfällen, da je nach Stärke des Effekts, das Fahrrad unbeherrschbar wird.

Sehr gefährlich ist die unkalkulierbare Auswirkung des gesamten Systems aus Fahrrad, Fahrergewichtes und zusätzlichen Gewichten auf dem Gepäckträger oder in Gepäcktaschen einzuschätzen. Denn ein und das selbe Fahrrad kann sich hinsichtlich dieses Lenkerflatterns in einer günstigen Konstellation aus den Gewichten unauffällig verhalten, mit erhöhtem Fahrergewicht und zusätzlichem Gepäck unbeherrschbar sein.

Insbesondere bei Lastenrädern ergeben sich aufgrund der hohen Massen ungünstige Verhältnisse, wodurch das Lenkerflattern verstärkt wird.

Um diesen physikalischen Effekt entgegenzuwirken, hat sich bei Motorrädern ein Lineardämpfer durchgesetzt, welcher sich zwischen Rahmen und Lenker befindet. Die Funktionsweise eines Dämpfers besteht darin, Schwingungen schnell abzubauen. Bei Motorrädern wird daher die Rotationsenergie durch einen Lineardämpfer abgebaut. Die Umsetzung dieser Lösung ist nicht ohne weiteres auf ein Fahrrad übertragbar, da Motorräder im Vergleich zu Fahrrädern grundsätzlich sehr massiv aufgebaut sind. Aus Gründen der Aerodynamik, der Optik, der Ergonomie und den konstruktiven Gegebenheiten ist die Anwendbarkeit der Motorrad-Lösung bei Fahrrädern nicht sinnvoll möglich.

Als aktuell bestehende Lösung zur Minimierung des Lenkerflatterns bei Fahrrädern gibt es einen Reibungsdämpfer, der allerdings nicht auf dem Prinzip eines Dämpfers beruht. Bei der bestehenden Lösung erzeugen Reibscheiben eine sehr hohe ständig vorhandene Reibung, die sowohl bei langsamen als auch bei schnellen Lenkbewegungen herrscht. Dadurch wird das Lenkerflattern zwar wirksam reduziert, als Nebeneffekt ist ein feinfühliges Lenken jedoch nicht mehr möglich. Durch den hohen ständigen Lenkwiderstand fühlt sich das Lenken unnatürlich an und ein freihändiges Fahren ist oft gar nicht mehr möglich. Beim freihändigen Fahrrad-Fahren folgt der Lenker automatisch den Effekten der Gewichtsverlagerung des Fahrers und macht das Freihändig-Fahren möglich, da sich der Lenker geringfügig eindreht. Durch die hohe Reibung ist das nicht mehr möglich und freihändiges Fahren in den meisten Fällen nicht möglich.

Zum Stand der Technik zählt auch ein in der europäischen Patentanmeldung EP 0 225 982 A1, der US-Patentschrift US 5 927 740 A1 oder der chinesischen Patentanmeldung CN 108 916 291 A beschriebener Lenkungsdämpfer, eine in der US-Patentanmeldung US 2011/241301 A1 beschriebene Lenkeinheit, ein in der deutschen Offenlegungsschrift DE 10 2013 106 899 A1 beschriebenes Lenkkopflager, ein in der deutschen Auslegeschrift DE 1 269 842 B beschriebenes schwingungsdämpfendes Lager und ein in der europäischen Patentanmeldung EP 2 706 256 A2 rotierender Dämpfer.

Zum Stand der Technik gehören auch Fahrräder, bei denen der Drehwinkel der Fahrradgabel durch einen Drehwinkelbegrenzer begrenzt wird. In der englischen Patentanmeldung GB 2 368 826 A wird ein Drehwinkelbegrenzer offenbart, der aber den Nachteil aufweist, dass bauartbedingt eine Verschmutzung nicht ausgeschlossen wird, wodurch die einwandfreie Funktionsfähigkeit gefährdet werden könnte. Um diesen Nachteil zu überwinden, wird in der europäischen Patentanmeldung ein Drehwinkelbegrenzer vorgeschlagen, der innerhalb des Steuerrohres angeordnet ist. Nachteilig ist hierbei, dass der Drehmittelbegrenzer ein zusätzliches Bauteil darstellt, wodurch eine Gewichtserhöhung nicht ausgeschlossen ist.

Der Erfindung liegt daher die Aufgabe zugrunde, eine die Nachteile des Standes der Technik überwindende Lagereinheit, ein die Nachteile des Standes der Technik überwindendes Verfahren zum Einsatz einer Lagereinheit und ein die Nachteile des Standes der Technik überwindendes Verfahren zur Funktionsbeeinflussung einer Lagereinheit bereitzustellen.

### Die Erfindung und ihre Vorteile

Die erfindungsgemäße Lagereinheit, mit den Merkmalen des Anspruchs 1, das erfindungsgemäße Verfahren zum Einsatz einer Lagereinheit, mit den Merkmalen des Anspruchs 11, das erfindungsgemäße Verfahren zur Funktionsbeeinflussung einer Lagereinheit, mit den Merkmalen des Anspruchs 14, der Schwingungsdämpfer, mit den Merkmalen des Anspruchs 16, das erfindungsgemäße Verfahren zum Einsatz eines Schwingungsdämpfers, mit den Merkmalen des Anspruchs 28, und das erfindungsgemäße Verfahren zur Funktionsbeeinflussung eines Schwingungsdämpfers, mit den Merkmalen des Anspruchs 31, haben demgegenüber den Vorteil, dass eine Lagereinheit, insbesondere eine Lagereinheit für ein Zweirad, bereitgestellt wird, die eine Lagerschale aufweist, die eine Außenseite und eine Innenseite aufweist und in der zumindest teilweise ein eine Außenseite und eine Innenseite aufweisenden Boden und mindestens ein Lager angeordnet sind, wobei der Boden mindestens eine Nut aufweist, in der mindestens ein Anschlag und/oder zumindest teilweise mindestens ein Dämpfelement und/oder mindestens ein Dämpfmedium angeordnet ist, wobei mindestens eine Nut an der Außenseite und/oder mindestens eine Nut an der Innenseite des Bodens angeordnet ist und mindestens eine Nut von einer Hülse und/oder der Lagerschale überdeckt ist, und/oder die Lagerschale mindestens eine durchgehende Öffnung von der Außenseite zur Innenseite aufweist und/oder die Lagerschale an der Innenseite mindestens eine Nut aufweist, in der mindestens ein Anschlag und/oder zumindest teilweise mindestens ein Dämpfelement und/oder mindestens ein Dämpfmedium angeordnet ist, wodurch ein Drehwinkel eines mit der Lagereinheit verbundenen Bauteils begrenzbar ist und/oder eine durch die Lagereinheit ermöglichte Drehbewegung (Rotationsbewegung) eines mit der Lagereinheit verbundenen Bauteils dämpfbar ist. Dadurch ist die erfindungsgemäße Lagereinheit ein Drehwinkelbegrenzer und/oder ein Schwingungsdämpfer (Rotationsdämpfer). Denkbar ist es somit, dass eine Hülse zur Überdeckung einer an der Außenseite des Bodens angeordneten Nut an der Außenseite des Bodens und/oder eine Hülse zur Überdeckung einer an der Innenseite des Bodens angeordneten Nut an der Innenseite des Bodens angeordnet ist.

Nach einer vorteilhaften Ausgestaltung der erfindungsgemäßen Lagereinheit ist in der Lagerschale zumindest teilweise mindestens eine eine Außenseite und eine Innenseite aufweisende Hülse angeordnet.

Nach einer zusätzlichen vorteilhaften Ausgestaltung der erfindungsgemäßen Lagereinheit ist zwischen einem in einer Nut befindlichen Dämpfelement und der Nut ein Spalt angeordnet.

Nach einer zusätzlichen vorteilhaften Ausgestaltung der erfindungsgemäßen Lagereinheit enthält mindestens eine Nut mindestens ein Dämpfmedium.

Nach einer diesbezüglich vorteilhaften Ausgestaltung der erfindungsgemäßen Lagereinheit ist mindestens ein Dämpfmedium durch mindestens eine Heizung und/oder mindestens eine Kühlung temperierbar. Hierdurch kann die Viskosität des Dämpfmediums und damit die Dämpfwirkung der erfindungsgemäßen Lagereinheit beeinflusst werden.

Nach einer zusätzlichen vorteilhaften Ausgestaltung der erfindungsgemäßen Lagereinheit ist mindestens ein Dämpfmedium Luft, ein Fluid und/oder ein Gas.

Nach einer diesbezüglich vorteilhaften Ausgestaltung der erfindungsgemäßen Lagereinheit ist mindestens ein Fluid ein elektrorheologisches und/oder magnetorheologisches Fluid. Bevorzugt ist ein elektrorheologisches Fluid eine Dispersion aus elektrisch nichtleitenden Basisflüssigkeiten und polarisierbaren Partikeln oder Tröpfchen. Ein magnetorheologisches Fluid ist bevorzugt eine Suspension aus einer Basisflüssigkeit und magnetisierbaren Partikeln.

Nach einer diesbezüglich vorteilhaften Ausgestaltung der erfindungsgemäßen Lagereinheit weist die erfindungsgemäße Lagereinheit zur Änderung der Viskosität des elektrorheologischen Fluids mindestens eine Vorrichtung zur Erzeugung eines elektrischen Feldes und/oder zur Änderung der Viskosität des magnetorheologischen Fluids mindestens eine Vorrichtung zur Erzeugung eines Magnetfeldes auf. Hierdurch kann die Viskosität des Dämpfmediums und damit die Dämpfwirkung der erfindungsgemäßen Lagereinheit beeinflusst werden. Beim Einsatz eines des elektrorheologischen Fluids erhöht sich beim Anlegen eines elektrischen Feldes in Abhängigkeit von dessen Feldstärke die durch das elektrorheologische Fluid übertragbare Schubspannung, also dessen Viskosität. Im Vergleich dazu, wird die durch das magnetorheologische Fluid übertragbare Schubspannung, also dessen Viskosität, beim Anlegen eines magnetischen Feldes in Abhängigkeit von dessen Feldstärke erhöht.

Nach einer zusätzlichen vorteilhaften Ausgestaltung der erfindungsgemäßen Lagereinheit weist die Lagereinheit mindestens ein Ausgleichssystem zur zumindest temporären Aufnahme mindestens eines Dämpfmediums auf.

Nach einer zusätzlichen vorteilhaften Ausgestaltung der erfindungsgemäßen Lagereinheit ist mindestens ein Dämpfelement in einer Kammer angeordnet.

Nach einer zusätzlichen vorteilhaften Ausgestaltung der erfindungsgemäßen Lagereinheit weist mindestens ein Dämpfelement eine Feder und/oder einen Anschlag auf.

Nach einer zusätzlichen vorteilhaften Ausgestaltung der erfindungsgemäßen Lagereinheit ist mindestens ein Anschlag beweglich in der Nut angeordnet.

Nach einer diesbezüglichen vorteilhaften Ausgestaltung der erfindungsgemäßen Lagereinheit ist die Bewegung des Anschlags eine Radialbewegung.

Nach einer zusätzlichen vorteilhaften Ausgestaltung der erfindungsgemäßen Lagereinheit weist mindestens ein Anschlag eine Feder auf.

Nach einer zusätzlichen vorteilhaften Ausgestaltung der erfindungsgemäßen Lagereinheit weist die Lagereinheit mindestens einen Gegendruckraum auf. Bevorzugt könnte dadurch zur Vermeidung von Gasblasen, wie bei Lineardämpfern üblich, ein Überdruck erzeugt werden, um ein Aufschäumen des Fluids, z.B. Öls, zu vermeiden. Bei Gasdruckstoßdämpfer steht dazu in einem Gegendruckraum ein hoher Gas-Überdruck (mindestens 20 - 30 bar) an, der die Ausgasung des Fluids, z.B. Öls, am angrenzenden Arbeitsraum vermeidet. Die erfindungsgemäße Lagereinheit könnte ebenso den Anschluss zu einer Gaskammer nutzen, um die Gasblasenbildung im Fluid, z.B. Öl, zu vermeiden.

Nach einer zusätzlichen vorteilhaften Ausgestaltung der erfindungsgemäßen Lagereinheit ist die Lagereinheit ein Schwingungsdämpfer und/oder ein Drehwinkelbegrenzer.

Nach einer zusätzlichen vorteilhaften Ausgestaltung des erfindungsgemäßen Verfahrens zum Einsatz einer Lagereinheit, die eine Lagerschale aufweist, die eine Außenseite und eine Innenseite aufweist und in der zumindest teilweise mindestens ein eine Außenseite und eine Innenseite aufweisenden Boden und mindestens ein Lager angeordnet sind, wobei der Boden mindestens eine Nut aufweist, in der mindestens ein Anschlag und/oder zumindest teilweise mindestens ein Dämpfelement und/oder mindestens ein Dämpfmedium angeordnet ist, wobei mindestens eine Nut an der Außenseite und/oder mindestens eine Nut an der Innenseite des Bodens angeordnet ist und mindestens eine Nut von einer Hülse und/oder der Lagerschale überdeckt ist, und/oder die Lagerschale mindestens eine durchgehende Öffnung von der Außenseite zur Innenseite aufweist und/oder die Lagerschale an der Innenseite mindestens eine Nut aufweist, in der mindestens ein Anschlag und/oder zumindest teilweise mindestens ein Dämpfelement und/oder mindestens ein Dämpfmedium angeordnet ist, wodurch die Lagereinheit als Drehwinkelbegrenzer einsetzbar ist, da ein durch die Lagereinheit ermöglichter Drehwinkel eines mit der Lagereinheit verbundenen Bauteils durch mindestens einen Endanschlag begrenzt wird, und/oder die Lagereinheit als Schwingungsdämpfer einsetzbar ist, da eine durch die Lagereinheit ermöglichte Drehbewegung eines mit der Lagereinheit verbundenen Bauteils gedämpft wird, kommt die Lagereinheit in einer Steuerkopflagerung eines Fahrzeuges zum Einsatz.

Nach einer diesbezüglichen vorteilhaften Ausgestaltung des erfindungsgemäßen Verfahrens ist das Fahrzeug ein Zweirad.

Nach einer zusätzlichen vorteilhaften Ausgestaltung des erfindungsgemäßen Verfahrens wird als Lagereinheit eine Lagereinheit, gemäß einem der Ansprüche 1 bis 10, eingesetzt.

Nach einer zusätzlichen vorteilhaften Ausgestaltung des erfindungsgemäßen Verfahrens zur Funktionsbeeinflussung einer Lagereinheit, die eine Lagerschale aufweist, die eine Außenseite und eine Innenseite aufweist und in der zumindest teilweise mindestens eine eine Außenseite und eine Innenseite aufweisende Hülse, ein eine Außenseite und eine Innenseite aufweisenden Boden und mindestens ein Lager angeordnet sind, wobei der Boden mindestens eine Nut aufweist, in der mindestens ein Anschlag und/oder zumindest teilweise mindestens ein Dämpfelement und/oder mindestens ein Dämpfmedium angeordnet ist, wobei mindestens eine Nut an der Außenseite und/oder mindestens eine Nut an der Innenseite des Bodens angeordnet ist und mindestens eine Nut von einer Hülse und/oder der Lagerschale überdeckt ist, und/oder die Lagerschale mindestens eine durchgehende Öffnung von der Außenseite zur Innenseite aufweist und/oder die Lagerschale an der Innenseite mindestens eine Nut aufweist, in der mindestens ein Anschlag und/oder zumindest teilweise mindestens ein Dämpfelement und/oder mindestens ein Dämpfmedium angeordnet ist, wodurch die Lagereinheit als Drehwinkelbegrenzer einsetzbar ist, da ein durch die Lagereinheit ermöglichter Drehwinkel eines mit der Lagereinheit verbundenen Bauteils durch mindestens einen Endanschlag begrenzt wird, und/oder die Lagereinheit als Schwingungsdämpfer einsetzbar ist, da eine durch die Lagereinheit ermöglichte Drehbewegung eines mit der Lagereinheit verbundenen Bauteils gedämpft wird, wobei der Drehwinkel durch Auswahl einer geeigneten Hülse, in der mindestens ein Dämpfelement angeordnet ist, und/oder einer geeigneten Lagerschale, in der mindestens ein Dämpfelement angeordnet ist, beeinflusst wird und/oder wobei der Drehwinkel durch Veränderung der Position eines in einer Nut angeordneten Anschlags beeinflusst wird und/oder wobei die Dämpfwirkung durch Auswahl eines geeigneten Dämpfmediums beeinflusst wird und/oder wobei die Dämpfwirkung durch Beeinflussung der Eigenschaften eines Dämpfmediums durch Erwärmung, durch Kühlung, durch mindestens ein magnetisches Feld und/oder durch mindestens ein elektrisches Feld beeinflusst wird, wird als Lagereinheit eine Lagereinheit, gemäß einem der Ansprüche 1 bis 10, eingesetzt und/oder wird das Verfahren bei einem Verfahren zum Einsatz eines Lagereinheit, gemäß einem der Ansprüche 11 bis 13, eingesetzt.

Nach einer vorteilhaften Ausgestaltung des erfindungsgemäßen Schwingungsdämpfers, der einer Lagerschale aufweist, die eine Außenseite und eine Innenseite aufweist und in der zumindest teilweise ein eine Außenseite und eine Innenseite aufweisenden Boden und mindestens ein Lager angeordnet sind, wobei der Boden mindestens eine Nut aufweist, in der mindestens ein Anschlag und/oder zumindest teilweise mindestens ein Dämpfelement und/oder mindestens ein Dämpfmedium angeordnet ist, wobei mindestens eine Nut an der Außenseite und/oder mindestens eine Nut an der Innenseite des Bodens angeordnet ist und mindestens eine Nut von einer Hülse und/oder der Lagerschale überdeckt ist, und/oder die Lagerschale mindestens eine durchgehende Öffnung von der Außenseite zur Innenseite aufweist und/oder die Lagerschale an der Innenseite mindestens eine Nut aufweist, in der mindestens ein Anschlag und/oder zumindest teilweise mindestens ein Dämpfelement und/oder mindestens ein Dämpfmedium angeordnet ist, ist in der Lagerschale zumindest teilweise mindestens eine eine Außenseite und eine Innenseite aufweisende Hülse angeordnet.

Nach einer zusätzlichen vorteilhaften Ausgestaltung des erfindungsgemäßen Schwingungsdämpfers ist mindestens eine Nut an der Außenseite und/oder mindestens eine Nut an der Innenseite des Bodens angeordnet.

Nach einer zusätzlichen vorteilhaften Ausgestaltung des erfindungsgemäßen Schwingungsdämpfers ist mindestens eine Nut von einer Hülse und/oder der Lagerschale überdeckt.

Nach einer zusätzlichen vorteilhaften Ausgestaltung des erfindungsgemäßen Schwingungsdämpfers ist zwischen einem in einer Nut befindlichen Dämpfelement und der Nut ein Spalt angeordnet.

Nach einer zusätzlichen vorteilhaften Ausgestaltung des erfindungsgemäßen Schwingungsdämpfers enthält mindestens eine Nut mindestens ein Dämpfmedium.

Nach einer diesbezüglichen vorteilhaften Ausgestaltung des erfindungsgemäßen Schwingungsdämpfers ist mindestens ein Dämpfmedium durch mindestens eine Heizung und/oder mindestens eine Kühlung temperierbar.

Nach einer zusätzlichen vorteilhaften Ausgestaltung des erfindungsgemäßen Schwingungsdämpfers ist mindestens ein Dämpfmedium Luft, ein Fluid und/oder ein Gas.

Nach einer diesbezüglichen vorteilhaften Ausgestaltung des erfindungsgemäßen Schwingungsdämpfers ist mindestens ein Fluid ein elektrorheologisches und/oder magnetorheologisches Fluid.

Nach einer zusätzlichen vorteilhaften Ausgestaltung des erfindungsgemäßen Schwingungsdämpfers weist der Schwingungsdämpfer zur Änderung der Viskosität des elektrorheologischen Fluids mindestens eine Vorrichtung zur Erzeugung eines elektrischen Feldes und/oder zur Änderung der Viskosität des magnetorheologischen Fluids mindestens eine Vorrichtung zur Erzeugung eines Magnetfeldes auf.

Nach einer zusätzlichen vorteilhaften Ausgestaltung des erfindungsgemäßen Schwingungsdämpfers ist mindestens ein Dämpfelement in einer Kammer angeordnet.

Nach einer zusätzlichen vorteilhaften Ausgestaltung des erfindungsgemäßen Schwingungsdämpfers weist mindestens ein Dämpfelement eine Feder und/oder einen Anschlag auf.

Nach einer zusätzlichen vorteilhaften Ausgestaltung des erfindungsgemäßen Schwingungsdämpfers ist mindestens ein Anschlag beweglich in der Nut angeordnet.

Nach einer diesbezüglichen vorteilhaften Ausgestaltung des erfindungsgemäßen Schwingungsdämpfers ist die Bewegung des Anschlags eine Radialbewegung.

Nach einer zusätzlichen vorteilhaften Ausgestaltung des erfindungsgemäßen Schwingungsdämpfers weist mindestens ein Anschlag eine Feder auf.

Nach einer zusätzlichen vorteilhaften Ausgestaltung des erfindungsgemäßen Schwingungsdämpfers weist der Schwingungsdämpfer mindestens einen Gegendruckraum auf.

Nach einer zusätzlichen vorteilhaften Ausgestaltung des erfindungsgemäßen Schwingungsdämpfers weist der Schwingungsdämpfer eine Lagereinheit, gemäß einem der Ansprüche 1 bis 10, auf.

Nach einer vorteilhaften Ausgestaltung des erfindungsgemäßen Verfahrens zum Einsatz eines Schwingungsdämpfers, der eine Lagerschale aufweist, die eine Außenseite und eine Innenseite aufweist und in der zumindest teilweise mindestens eine eine Außenseite und eine Innenseite aufweisende Hülse, ein eine Außenseite und eine Innenseite aufweisenden Boden und mindestens ein Lager angeordnet sind, wobei der Boden mindestens eine Nut aufweist, in der mindestens ein Anschlag und/oder zumindest teilweise mindestens ein Dämpfelement und/oder mindestens ein Dämpfmedium angeordnet ist, wobei mindestens eine Nut an der Außenseite und/oder mindestens eine Nut an der Innenseite des Bodens angeordnet ist und mindestens eine Nut von einer Hülse und/oder der Lagerschale überdeckt ist, und/oder die Lagerschale mindestens eine durchgehende Öffnung von der Außenseite zur Innenseite aufweist und/oder die Lagerschale an der Innenseite mindestens eine Nut aufweist, in der mindestens ein Anschlag und/oder zumindest teilweise mindestens ein Dämpfelement und/oder mindestens ein Dämpfmedium angeordnet ist, wodurch ein durch den Schwingungsdämpfer ermöglichter Drehwinkel eines mit dem Schwingungsdämpfer verbundenen Bauteils durch mindestens einen Endanschlag begrenzt wird und/oder eine durch den Schwingungsdämpfer ermöglichte Drehbewegung eines mit dem Schwingungsdämpfer verbundenen Bauteils gedämpft wird, kommt der Schwingungsdämpfer in einer Steuerkopflagerung eines Fahrzeuges zum Einsatz.

Nach einer diesbezüglichen vorteilhaften Ausgestaltung des erfindungsgemäßen Verfahrens ist das Fahrzeug ein Zweirad.

Nach einer zusätzlichen vorteilhaften Ausgestaltung des erfindungsgemäßen Verfahrens wird als Schwingungsdämpfer ein Schwingungsdämpfer, gemäß einem der Ansprüche 16 bis 27, eingesetzt.

Nach einer vorteilhaften Ausgestaltung des erfindungsgemäßen Verfahrens zur Funktionsbeeinflussung eines Schwingungsdämpfers, der eine Lagerschale aufweist, die eine Außenseite und eine Innenseite aufweist und in der zumindest teilweise mindestens ein eine Außenseite und eine Innenseite aufweisenden Boden und mindestens ein Lager angeordnet sind, wobei der Boden mindestens eine Nut aufweist, in der mindestens ein Anschlag und/oder zumindest teilweise mindestens ein Dämpfelement und/oder mindestens ein Dämpfmedium angeordnet ist, wobei mindestens eine Nut an der Außenseite und/oder mindestens eine Nut an der Innenseite des Bodens angeordnet ist und mindestens eine Nut von einer Hülse und/oder der Lagerschale überdeckt ist, und/oder die Lagerschale mindestens eine durchgehende Öffnung von der Außenseite zur Innenseite aufweist und/oder die Lagerschale an der Innenseite mindestens eine Nut aufweist, in der mindestens ein Anschlag und/oder zumindest teilweise mindestens ein Dämpfelement und/oder mindestens ein Dämpfmedium angeordnet ist, wodurch ein durch den Schwingungsdämpfer ermöglichter Drehwinkel eines mit dem Schwingungsdämpfer verbundenen Bauteils durch mindestens einen Endanschlag begrenzt wird und/oder eine durch den Schwingungsdämpfer ermöglichte Drehbewegung eines mit dem Schwingungsdämpfer verbundenen Bauteils gedämpft wird, wobei der Drehwinkel durch Auswahl einer geeigneten Hülse, in der mindestens ein Dämpfelement angeordnet ist, und/oder einer geeigneten Lagerschale, in der mindestens ein Dämpfelement angeordnet ist, beeinflusst wird und/oder wobei der Drehwinkel durch Veränderung der Position eines in einer Nut angeordneten Anschlags beeinflusst wird und/oder wobei die Dämpfwirkung durch Auswahl eines geeigneten Dämpfmediums beeinflusst wird und/oder wobei die Dämpfwirkung durch Beeinflussung der Eigenschaften eines Dämpfmediums durch Erwärmung, durch Kühlung, durch mindestens ein magnetisches Feld und/oder durch mindestens ein elektrisches Feld beeinflusst wird, wird als Schwingungsdämpfer eine Schwingungsdämpfer, gemäß einem der Ansprüche 16 bis 27, eingesetzt wird und/oder das Verfahren bei einem Verfahren zum Einsatz eines Schwingungsdämpfers, gemäß einem der Ansprüche 28 bis 30, eingesetzt.

Die erfindungsgemäße Lagereinheit, das erfindungsgemäße Verfahren zum Einsatz einer Lagereinheit, das erfindungsgemäße Verfahren zur Funktionsbeeinflussung einer Lagereinheit, der erfindungsgemäße Schwingungsdämpfers, das erfindungsgemäße Verfahren zum Einsatz eines Schwingungsdämpfers und das erfindungsgemäße Verfahren zur Funktionsbeeinflussung eines Schwingungsdämpfers haben demgegenüber den Vorteil, dass die Erfindung, sofern sie bei Zweirädern eingesetzt wird, um dem Lenkerflattern von Zweirädern entgegenzuwirken, das gleiche physikalische Grundprinzip wie marktübliche Lösungen, die sich seit Jahrzehnten bei Motorrädern durchgesetzt haben, nutzt. Diese bekannten Lösungen setzen die Drehbewegung des Lenkers in eine lineare Bewegung für einen linearen Stoßdämpfer um, indem der Stoßdämpfer an zwei Schwingen am Rahmen und exzentrisch zur Lenkachse angebracht ist. Die Rotationsbewegung (das Lenkerflattern) wird also durch einen gewöhnlicher Lineardämpfer gedämpft.

Die Erfindung bietet im Gegensatz zu dem Einsatz eines Lineardämpfers den Vorteil einer direkten Dämpfung der Rotationsbewegung des Lenkers. Dadurch kann eine für das Fahrrad angemessene, kompakte Bauform realisiert werden. Der Rotationsdämpfer (Schwingungsdämpfer) ermöglicht die kompakte Bauform, da die Lenkerbewegung nicht, wie durch den Stand der Technik vorbekannt, von einer kreisförmigen Bewegung in eine Linearbewegung umgewandelt wird, wodurch viele Komponenten entfallen.

Auch wenn moderne Fahrräder beispielsweise durch den zusätzlichen Antriebsmotor schwerer werden, spielt das Gesamtgewicht der Fahrräder eine sehr große Rolle. Da beispielsweise E-Bikes bei leerem Akku von Muskelkraft bewegt werden müssen, streben alle Hersteller möglichst geringe Gewichte an. Der erfindungsgemäße Rotationsdämpfer stellt kein merkliches Zusatzgewicht dar, wohingegen ein linearer Lenkungsdämpfer bauartbedingt das Fahrradgewicht um ca. 1 % - 5 % erhöhen würde.

Ein weiterer Vorteil besteht in der einfachen Adaptierung an bestehende Fahrradrahmen. Der erfindungsgemäße Rotationsdämpfer benötigt keine zusätzlichen Befestigungselemente an Rahmen oder Lenker und kann ohne Modifikation des Fahrrads nachgerüstet werden. Hersteller von Fahrrädern haben ebenso die Möglichkeit, in bereits existierende Fahrradmodelle den erfindungsgemäßen Rotationsdämpfer in einem "running change" zu integrieren und dadurch die Sicherheit zu erhöhen.

Hinsichtlich der Ergonomie besteht ein großer Unterschied zwischen Motorrädern und Fahrrädern. Denn um das Fahrradpedal zu betätigen, ist ein entsprechender Schwenkbereich der Beine als Freiraum zu berücksichtigen. Ein Lineardämpfer zwischen Rahmen und Lenker wäre konstruktiv äußerst schwer umzusetzen, wohingegen die erfindungsgemäße Rotationsdämpfung innenliegend im Steuerrohr nur Platz beansprucht, der ohnehin vorhanden ist und üblicherweise nicht genutzt wird. Die kompakte Lösung vermeidet dadurch eine Kollision der Dämpfung mit dem Fahrer.

Moderne E-Bikes bieten nicht nur die Funktionalität des elektrischen Antriebs, sondern gerade bei teuren Modellen eine möglichst klare, aerodynamische Formsprache ohne über den Rahmen überstehenden Bauteile. Ein aufgesetzter Lineardämpfer wäre daher aus allein schon optischen Gründen keine akzeptable Lösung. Der erfindungsgemäße Rotationsdämpfer ist aufgrund seiner durch den Einbau im Steuerrohr bewirkten Unsichtbarkeit bei allen Fahrrädern einsetzbar.

Ein weiterer Vorteil der Erfindung besteht darin, dass je nach Ausführung ein Drehwinkelbegrenzer bereitgestellt wird, durch den eine Begrenzung des Drehwinkels realisiert werden kann. Denn die Drehbewegung des Lenkers soll in manchen Anwendungsfällen nur in einem definierten Winkelbereich nutzbar sein, um insbesondere Verbindungskabel und Züge zwischen Lenker und Rahmen nicht ineinander zu verdrehen. Um die Mittellage des Lenkers (Geradeausfahrt) sind die Endanschläge bevorzugt symmetrisch angeordnet, damit der Lenker um den gleichen Winkelbetrag nach links und nach rechts ausgelenkt werden kann.

Ebenso kann die erfindungsgemäße Lagereinheit als Schwingungsdämpfer und/oder Drehwinkelbegrenzer in vielen Anwendungen im Maschinenbau eingesetzt werden, in denen eine oszillierende Drehbewegung gedämpft werden soll und/oder ein Drehwinkel zu begrenzen ist. Die Erfindung ist daher nicht auf eine erfindungsgemäße Lagereinheit r für Lenker von Zwei- und Dreiradfahrzeugen beschränkt.

Weitere Vorteile und vorteilhafte Ausgestaltungen der Erfindung sind der nachfolgenden Beschreibung und den Zeichnungen entnehmbar.

### Zeichnungen

Bevorzugte Ausführungsbeispiele des erfindungsgemäßen Gegenstands sind in den Zeichnungen dargestellt und werden im Folgenden näher erläutert. Es zeigen
- Fig. 1: eine isometrische Explosivdarstellung einer Steuerkopflagerung,
- Fig. 2: eine perspektivische Explosionsdarstellung einer erfindungsgemäßen Lagereinheit,
- Fig. 3: eine weitere perspektivische Explosionsdarstellung einer erfindungsgemäßen Lagereinheit, gemäß Fig. 2,
- Fig. 4: eine weitere perspektivische Explosionsdarstellung einer erfindungsgemäßen Lagereinheit, gemäß Fig. 2,
- Fig. 5: eine weitere perspektivische Explosionsdarstellung einer erfindungsgemäßen Lagereinheit, gemäß Fig. 2,
- Fig. 6: eine perspektivische Schnittzeichnung einer erfindungsgemäßen Lagereinheit,
- Fig. 7: eine perspektivische Explosivdarstellung der erfindungsgemäßen Lagereinheit, gemäß Fig. 6,
- Fig. 8: ein Dämpfelement, gemäß dem Ausschnitt A aus Fig. 6,
- Fig. 9: eine Detailansicht einer erfindungsgemäßen Lagereinheit von oben,
- Fig. 10: eine Seitenansicht auf die Hülse, den Boden und das Lager einer erfindungsgemäßen Lagereinheit,
- Fig. 11: eine perspektivische Schnittzeichnung der erfindungsgemäßen Lagereinheit, gemäß der Linie B-B aus Fig. 10,
- Fig. 12: ein Ventil, gemäß dem Ausschnitt D aus Fig. 10,
- Fig. 13: eine perspektivische Schnittzeichnung, gemäß der Linie C-C aus Fig. 10,
- Fig. 14: eine perspektivische Darstellung eines Bodens mit Ventil,
- Fig. 15: eine perspektivische Explosivdarstellung eines Bodens,
- Fig. 16: einen Boden im Schnitt,
- Fig. 17: ein Schaubild einer Dämpferkurve mit Druckbegrenzung,
- Fig. 18: einen Boden im Schnitt,
- Fig. 19: eine perspektivische Darstellung einer unteren Lagerschale,
- Fig. 20: eine weitere perspektivische Explosivdarstellung einer erfindungsgemäßen Lagereinheit,
- Fig. 21: ein Dämpfelement, gemäß dem Ausschnitt E aus Fig. 20,
- Fig. 22: eine Schnittzeichnung der erfindungsgemäßen Lagereinheit, gemäß Fig. 20,
- Fig. 23: eine Schnittzeichnung der erfindungsgemäßen Lagereinheit, gemäß der Linie F-F aus Fig. 22,
- Fig. 24: einen vergrößerten Ausschnitt G aus Fig. 22,
- Fig. 25: eine teilweise als Schnitt dargestellte perspektivische Darstellung der erfindungsgemäßen Lagereinheit, gemäß Fig. 20,
- Fig. 26: eine weitere perspektivische Explosivdarstellung einer erfindungsgemäßen Lagereinheit,
- Fig. 27: eine teilweise als Schnitt dargestellte Seitenansicht des zusammengesetzten erfindungsgemäßen Schwingungsdämpfers, gemäß Fig. 26,
- Fig. 28: eine teilweise als Schnitt dargestellte perspektivische Darstellung der zusammengesetzten erfindungsgemäßen Lagereinheit, gemäß Fig. 26,
- Fig. 29: einen vergrößerten Ausschnitt H aus Fig. 27,
- Fig. 30: eine teilweise als Schnitt dargestellte perspektivische Darstellung der zusammengesetzten erfindungsgemäßen Lagereinheit, gemäß Fig. 26,
- Fig. 31: eine perspektivische Explosionsdarstellung eines anderen Ausführungsbeispiels einer erfindungsgemäßen Lagereinheit,
- Fig. 32: eine perspektivische Schnittzeichnung einer erfindungsgemäßen Lagereinheit, gemäß Fig. 31, und
- Fig. 33: eine perspektivische Explosivdarstellung der erfindungsgemäßen Lagereinheit, gemäß Fig. 31.

### Beschreibung des Ausführungsbeispiels

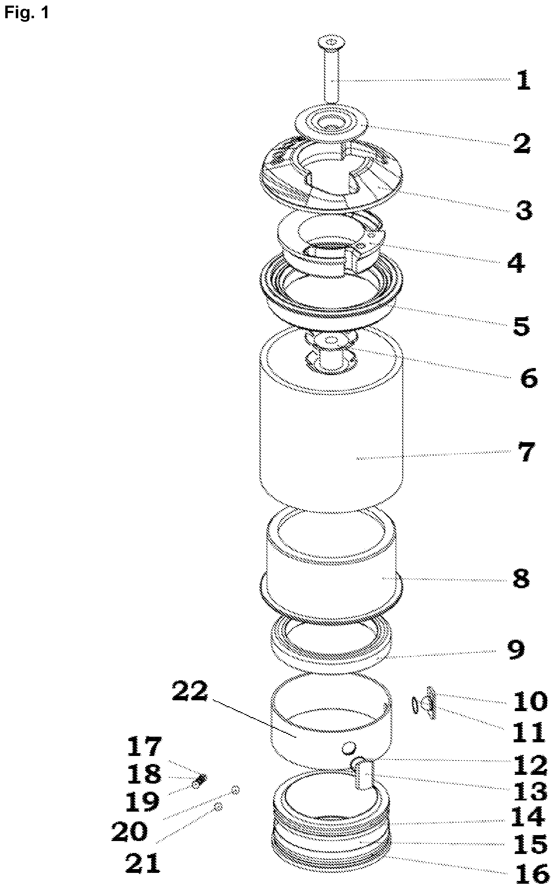

Fig. 1 zeigt eine isometrische Explosivdarstellung einer Steuerkopflagerung. Die Steuerkopflagerung ist in ein Steuerrohr 7 eines hier nicht dargestellten Rahmes eines Fahrzeuges eingebaut und besteht in bekannter Weise aus einer unterhalb eines Lenkervorbaus eines Lenkers des Fahrzeuges in dem Steuerrohr 7 angeordneten oberen und einer oberhalb der hier ebenfalls nicht dargestellten Gabel mit Gabelschaft des Fahrzeugs angeordneten unteren Steuerkopflagerung. Die obere Steuerkopflagerung weist eine obere Lagerschale mit Lager 5 (oberes Wälzlager) auf, das mittels eines Klemmrings 4 in dem Steuerrohr 7 montiert ist. Die untere Steuerkopflagerung besteht aus einem Boden 15, der auf den hier nicht dargestellten Gabelschaft aufgeschlagen wird, einem auf dem Boden 15 aufliegendes unteres Lager 9 (unteres Wälzlager) und einer unteren Lagerschale 8, in die das untere Lager 9 mit seinem Außenring eingepresst ist. Die untere Lagerschale 8 ist in die untere Öffnung des Steuerrohres 7 eingepresst. Der Gabelschaft ist durch einen Innenring des unteren Lagers 9 und den Innenring des oberen Lagers 5 hindurchgeführt und ragt bis in den oberen Klemmring 4 hinein. In die obere Öffnung des Gabelschafts ist eine Spannkralle 6 eingeschlagen, die das vom Fahrer auf den Lenker des Fahrzeugs aufgebrachte Lenk-Drehmoment über den hier ebenfalls nicht dargestellten Lenkervorbau auf die Gabel überträgt. Gemäß gesetzlicher Vorschrift liegt das Mindestdrehmoment bei 60 Nrn. Der Vollständigkeit halber sind in der Fig. 1 noch die Teile dargestellt, die den Lenkervorbau mit der Gabel und dem Steuerrohr 7 verbinden: das Steuerrohr 7 ist mittels einer Cover 3 (Spacer) abgedeckt. Der Lenkervorbau wird mittels eines Spanndeckels 2 und einer Einstellschraube 1 mit dem Gabelschaft fest und dem Steuerrohr 7 spielfrei drehbar verbunden. Die für die Erfindung wesentliche Steuerkopflagerung ist die untere. Wie aus Fig. 1 zu erkennen, weist der Boden 15, um einen Verlust von Dämpfmedium (z.B. Fluid, Luft oder Gas) zu vermeiden, einen oberen Dichtring 14 und einen unteren Dichtring 16 auf. Zusätzlich sind an dem Boden 15 eine linke Ausrückkugel 17, eine Feder 18, eine rechte Ausrückkugel 19, eine linke Sperrkugel 20 und eine rechte Sperrkugel 21 angeordnet. Der Boden 15 ist in eine untere Öffnung einer Hülse 22, die ein rechtes Dämpfelement 10, ein ringförmiges Dichtungselement 11 für das rechte Dämpfelement 10, ein linkes Dämpfelement 13 und ein ringförmiges Dichtungselement 12 für das linke Dämpfelement 13 aufweist.

Die Erfindung erzeugt bevorzugt als Schwingungsdämpfer und Drehwinkelbegrenzer eine Dämpfung der Lenkbewegung, bei der die beiden Endlagen durch einen Anschlag begrenzt sind. Bei der Dämpfung als auch bei der Anschlagfunktion entsteht ein zwischen Lenker und Rahmen zu übertragendes Drehmoment, dessen Krafteinleitung zwischen der Steuerkopflagerung und dem Gabelschaft stattfindet. Die untere Lagerschale 8 leitet das Drehmoment in den Rahmen ein, der Boden 15 leitet das Drehmoment in die Fahrradgabel ein. Das Ausführungsbeispiel zeigt eine vorteilhafte Anordnung der Erfindung an der unteren Lagerstelle. Diese Anordnung ist deshalb vorteilhaft, da der Trend bei modernen Fahrräder hin zur vollständigen Integration von Schaltzüge und Kabeln geht. Infolgedessen ist im unteren Bereich des Steuerrohrs 7 mehr Platz als an der oberen Lagerstelle, da dort beispielsweise keine Schaltzüge oder Bremsleitungen verlaufen. Ebenso ist die direkte Dämpfung der Kreisbewegung vorteilhaft, da auf eine Hebelmechanik zur Verwendung gewöhnlicher Lineardämpfer verzichtet werden kann.

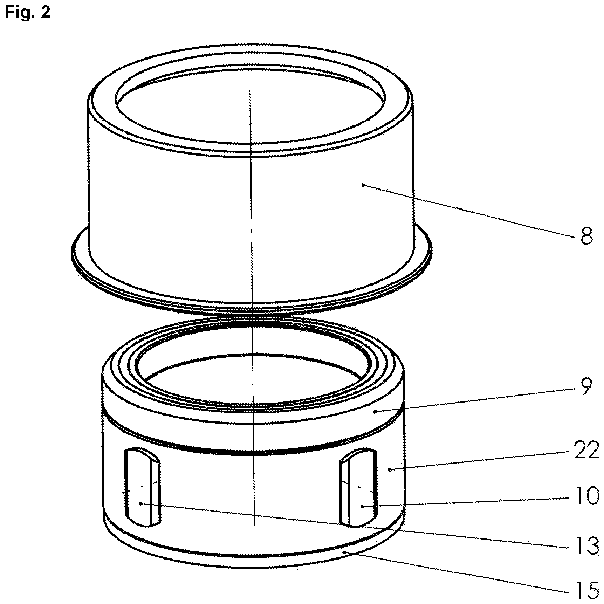

Fig. 2 zeigt eine perspektivische Explosionsdarstellung einer erfindungsgemäßen Lagereinheit, der beispielsweise als untere Funktionseinheit einer Steuerkopflagerung einsetzbar ist, gemäß Fig. 1, entspricht. Die untere Funktionseinheit stellt eine montagefertige Baugruppe dar und besteht insbesondere aus dem Boden 15, dem linken Dämpfelement 13, dem rechten Dämpfelement 10, der Hülse 22 und dem unteren Lager 9. Die untere Funktionseinheit wird drehfest auf die Welle (bzw. Fahrradgabel) montiert und die untere Lagerschale 8 wird drehfest in den Rahmen eingepresst.

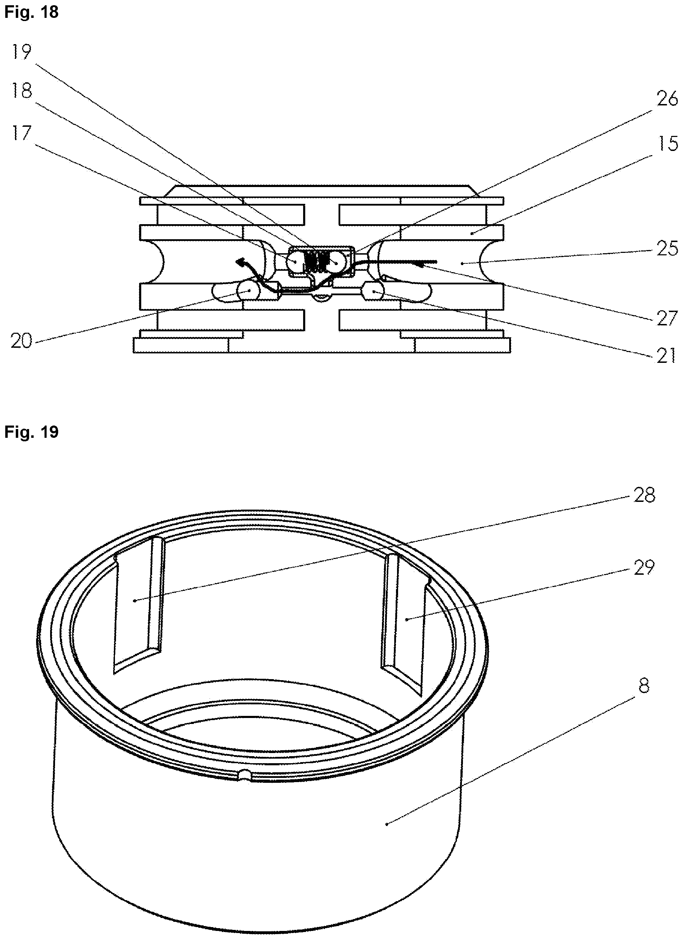

Wenn die vormontierte untere Funktionseinheit in die untere Lagerschale 8 eingeschoben wird, wird das rechte Dämpfelement 10 in eine in Fig. 19 dargestellte Nut 29 für das rechte Dämpfelement 10 und das linke Dämpfelement 13 in eine in Fig. 19 dargestellte Nut 28 für das linke Dämpfelement 13 eingeführt. Somit ist der Kraftfluss zwischen den Bauteilen Boden 15, rechtes Dämpfelement 10, linkes Dämpfelement 13 Hülse 22, unteren Lagerschale 8 und Steuerrohr 7 möglich.

Die grundsätzliche Funktionsweise eines zum Stand der Technik gehörenden linearen, hydraulischen Stoßdämpfers stellt sich wie folgt dar: Der Wirkmechanismus eines gewöhnlichen Stoßdämpfers beruht auf der progressiven Widerstandskraft, die beim Verdrängen von Stoßdämpferöl durch ein Ventil entsteht. Bei einer linearen Kolbenbewegung wird Stoßdämpferöl durch Verengungen geleitet und ein Widerstand erzeugt. Da die Widerstandskraft bei zunehmender Fließgeschwindigkeit steigt, werden langsame Bewegungen weniger stark gedämpft als schnelle Bewegungen. Sollen Drehbewegungen hydraulisch gedämpft werden, entsprechen Hebelstoßdämpfer dem aktuellen Stand der Technik. Dabei setzt eine Hebelmechanik eine Drehbewegung in eine Linearbewegung um, die dann mit einem Lineardämpfer gedämpft wird. Das Umsetzen der Drehbewegung in eine Linearbewegung erfordert ein zusätzliches mechanisches System.

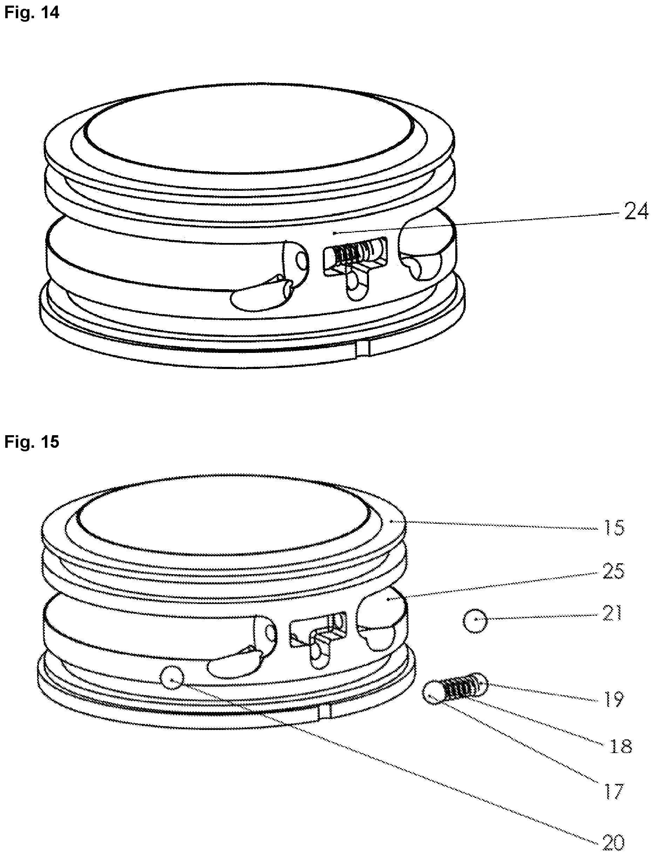

Hiervon unterscheidet sich die Funktionsweise der erfindungsgemäßen Lagereinheit erheblich. Der erfindungsgemäße in Kreisbewegung wirkende Schwingungsdämpfer, der auch als Rotationsdämpfer bezeichnet werden kann, nutzt wie der Lineardämpfer die progressive Wirkung von Fluiden und Gasen, um eine in Abhängigkeit zur Drehgeschwindigkeit stehende Dämpfkraft bzw. ein dämpfendes Drehmoment zu erzeugen. Während aber bei herkömmlichen Lineardämpfern über eine Kolbenbewegung Öl durch ein Ventil gepresst wird und dies zu einer progressiven Zunahme der Dämpfkraft in Abhängigkeit zur Bewegungsgeschwindigkeit führt, wird bei dem erfindungsgemäßen Rotationsdämpfer mindestens ein Dämpfelement, bevorzugt mehrere Dämpfelemente, insbesondere das rechte Dämpfelement 10 und das linke Dämpfelement 13, in Drehbewegung zu einer in Fig. 15 dargestellten mit einem Dämpfmedium, das beispielsweise ein Fluid, Luft oder ein Gas sein kann, gefüllten Nut 25 versetzt, wodurch beim Durchfahren der Nut 25 einen Widerstand erzeugt wird, da sowohl das Umströmen des Dämpfmediums um das Dämpfelement (bzw. die Dämpfelemente) als auch das Verdrängen des Dämpfmediums durch den Spalt zwischen dem Dämpfelement (bzw. den Dämpfelementen) und der Nut 25 zu einer progressiv ansteigende Kraft bei zunehmender Geschwindigkeit führt.

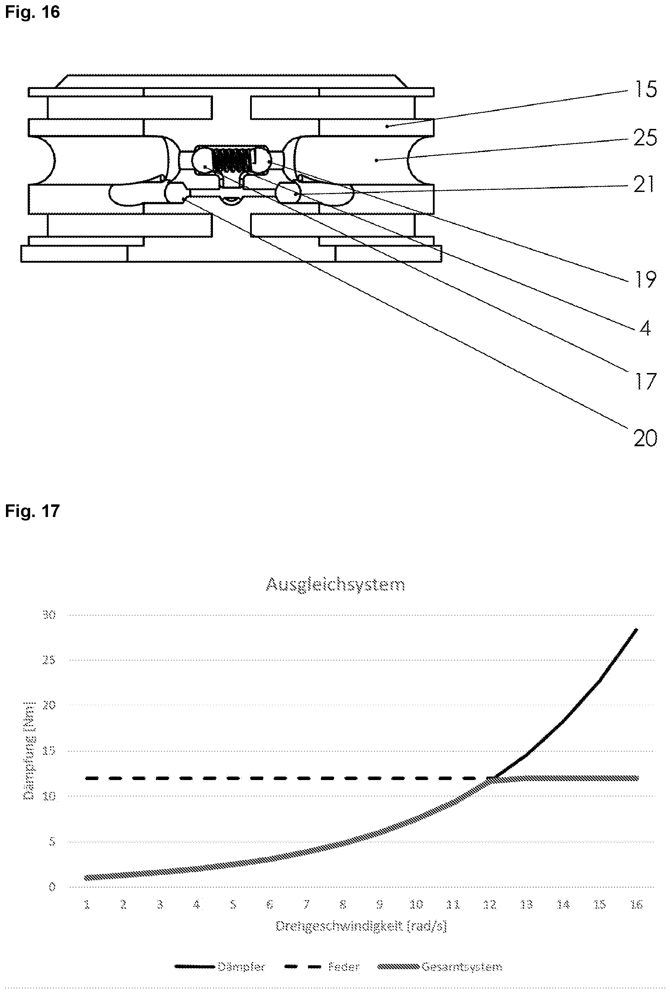

Auf dem Wirkprinzip des Lineardämpfers basierend, führt also ein sich kreisförmig bewegendes Dämpfelement bzw. sich kreisförmig bewegende Dämpfelemente, wie in Fig. 17 dargestellt, dazu, dass ein drehgeschwindigkeitsabhängiger progressiver Widerstand erzeugt wird, der zu einer Bremskraft in Form eines Drehmoments zwischen dem Boden 15 und der Lagerschale 8 führt.

Das Dämpfelement erzeugt ein umso höheres Drehmoment, je schmaler der Spalt zwischen der Nut 25 und dem mindestens einen Dämpfelement ausgebildet ist. Der Betrag der Dämpfkraft hängt im Wesentlichen von der Viskosität des Fluids, dem Flächeninhalt der Querschnittsfläche des Spaltes und der Geschwindigkeit des Dämpfelementes ab.

Die erfindungsgemäße Lagereinheit weist somit ein ideales Verhalten auf, um beispielsweise eine Drehbewegung eines Fahrradsteuersatzes zu dämpfen. Hierbei besteht die Anforderung, langsame Lenkbewegungen für feinfühlig vorzunehmende Korrekturen der Fahrtrichtung möglichst uneingeschränkt zuzulassen, jedoch bei einer unkontrolliert schnellen Hin- und Herbewegung (beispielsweise hervorgerufen durch den Shimmy-Effekt) mit einer hohen Dämpfkraft entgegen zu wirken.

Denkbar wäre auch, dass bei der Verwendung von mindestens zwei Dämpfelementen die Dämpfelemente in mindestens zwei Nuten angeordnet sind, wodurch mindestens ein Dämpfelement in einer Nut und mindestens ein weiteres Dämpfelement in einer anderen Nut angeordnet ist. Zusätzlich ist hierbei denkbar, dass sich das in der einen Nut befindliche Dämpfmedium von dem in der anderen Nut befindliche Dämpfmedium unterscheidet, so dass beispielsweise in der einen Nut ein Gas und in der anderen Nut ein Fluid, in der einen Nut ein Fluid mit einer höheren Viskosität und in der anderen Nut ein Fluid mit einer geringeren Viskosität oder in der einen Nut ein leichter zu komprimierendes Gas und in der anderen Nut ein schwerer zu komprimierendes Gas zum Einsatz kommt. Hierdurch ist es möglich, auch bei schwankenden Witterungsbedingungen ein optimales Dämpfungsverhalten zu gewährleisten.

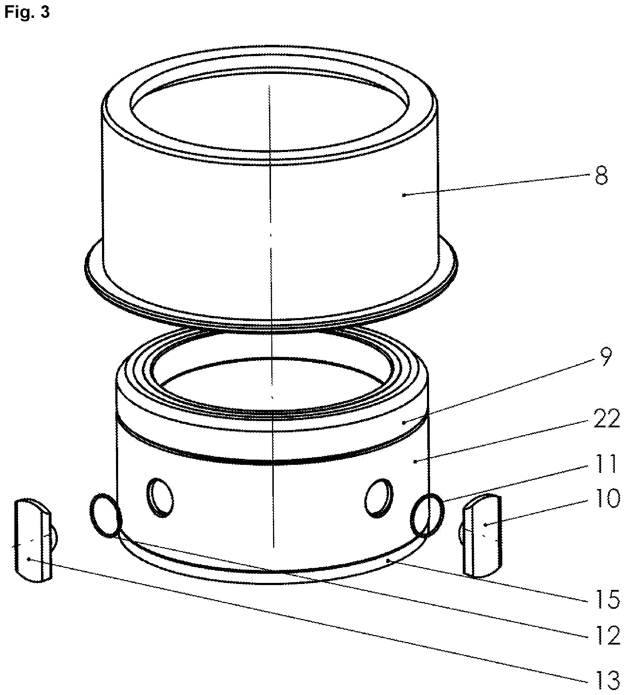

Fig. 3 zeigt eine weitere perspektivische Explosionsdarstellung einer erfindungsgemäßen Lagereinheit, gemäß Fig. 2. Die erfindungsgemäße Lagereinheit, die je nach Ausführung ein Schwingungsdämpfer und/oder ein Drehwinkelbegrenzer sein kann, besteht aus dem Boden 15, dem linken Dämpfelement 13 mit seinem Dichtungselement 12, dem rechten Dämpfelement 10 mit seinem Dichtungselement 11, der Hülse 22 und dem unteren Lager 9 und wird in die untere Lagerschale 8 eingeführt.

Das linke Dämpfelement 13 und das rechte Dämpfelement 10 sind in einem bestimmten Winkel zueinander angeordnet, wodurch eine Drehwinkelbegrenzung realisiert werden kann. Die Funktion der Drehwinkelbegrenzung wird dadurch ermöglicht, dass das linke Dämpfelement 13 und das rechte Dämpfelement 10 nicht 360° rotieren können. Die im Ausführungsbeispiel beschriebene Funktion des Ausgleichssystems bedingt einen Mittelsteg, durch den das Dämpfmedium, z.B. das Fluid, geleitet wird. Dieser Mittelsteg übernimmt zeitgleich die Funktion des Endanschlags der Drehbewegung, da die beiden Dämpfelemente dort anschlagen.

Ein weiterer sich dadurch ergebender Vorteil besteht in der einfachen konstruktiven Anpassbarkeit dieses Drehwinkels, da nur ein Verändern des Winkels zwischen den beiden Anschlagelementen, nämlich dem linken Dämpfelement 13 und dem rechten Dämpfelement 10, zueinander notwendig ist, um einen anderen Winkel zwischen den beiden Anschlägen zu erzeugen. Dies bedeutet, dass allein durch den Austausch einer Hülse 22 mit einer Hülse 22, bei der die Dämpfelemente in einem anderen Winkel zueinander angeordnet sind, der Drehwinkel verändert werden kann. Ein Austausch des Bodens ist somit nicht erforderlich.

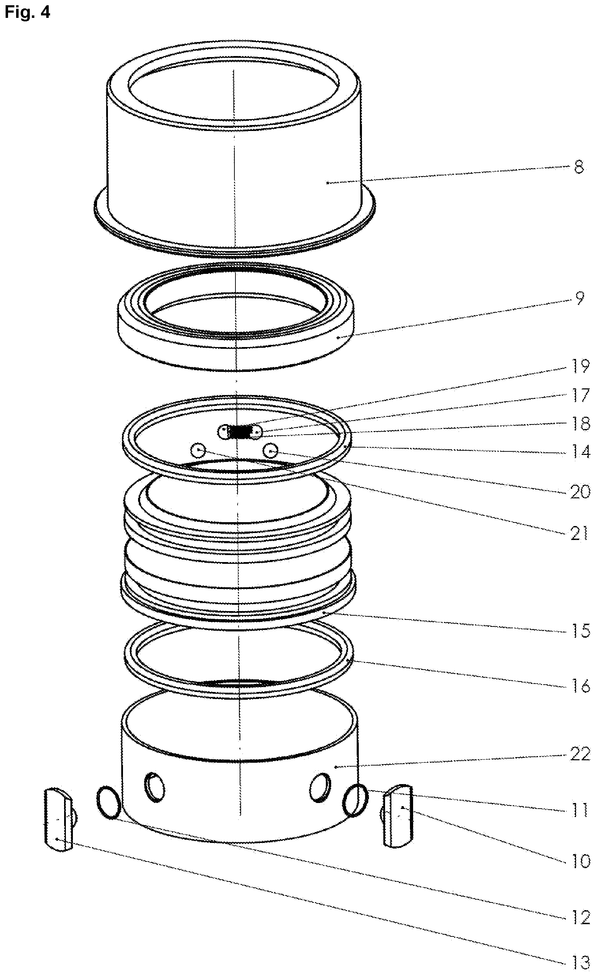

Fig. 4 eine weitere perspektivische Explosionsdarstellung einer erfindungsgemäßen Lagereinheit, gemäß Fig. 2. Um Temperaturunterschiede auszugleichen, wird bevorzugt ein Ausgleichsystem verwendet. Fluide, wie beispielsweise Dämpferöle, weisen ein temperaturabhängiges Verhalten auf. Bei hohen Temperaturen sinkt die Viskosität von Fluiden und führt zu einem geringen Widerstandsmoment bzw. einer geringen Dämpfkraft. Diese dadurch temperaturabhängige Dämpfkraft ist beispielsweise bei den Stoßdämpfern älterer Fahrzeuge stark ausgeprägt. Denn nach einer längeren Fahrt erwärmt sich das Öl im Stoßdämpfer und führt zu einer schwammigen Straßenlage infolge einer abfallenden Dämpfwirkung. Die hohe Viskosität des Fluides bei niedrigen Temperaturen führt zu einer hohen Dämpfkraft der Dämpfelemente und würde zum einen zu einer sehr hohen Belastung der Dichtungselemente 11, 12 und zum anderen einem zu hohen Widerstandsmoment bei niedrigen Temperaturen führen. Eine Begrenzung des maximalen durch den Dämpfer erzeugten Drehmomentes soll dahingehend ab einem konstruktiv festlegbaren Wert erfolgen, nämlich der in Fig. 17 gezeigten Federstärke. Erfindungsgemäß löst das interne Ausgleichsystem diese Aufgabe, indem eine durch eine Feder 18 gefederte Kugel (linke Ausrückkugel 17, rechte Ausrückkugel 19) einen Kanal freilegt, in dem das Fluid abließen kann. Die Temperaturabhängigkeit von Federn ist vernachlässigbar, weshalb die Aktivierungskraft des Ausgleichsystems temperaturunabhängig ist. Somit erzeugt der eigentliche Dämpfer einen temperatur- und drehgeschwindigkeitsabhängigen Drehwiderstand, dessen Maximalkraft durch das Ausgleichsystem begrenzt wird.

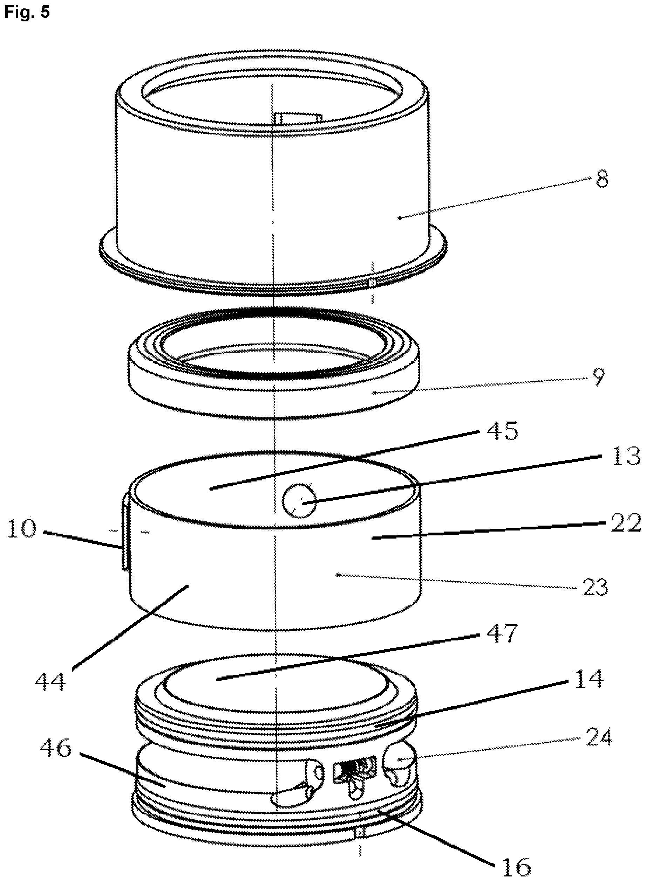

Fig. 5 zeigt eine weitere perspektivische Explosionsdarstellung einer erfindungsgemäßen Lagereinheit, gemäß Fig. 2. Das interne Ausgleichsystem ist bevorzugt zweiseitig wirkend und limitiert die maximal mögliche Dämpfkraft, in dem es, wie in Fig. 17 dargestellt, bei Überschreiten einer definierten Dämpfkraft einen Kanal (Rücklauf) zum Rückströmen des Fluides öffnet. Das Funktionsprinzip des Ausgleichsystems ist vergleichbar mit einem Doppelrückschlagventil, das in beide Drehrichtungen öffnet, wenn der anstehende Druck die Federkraft der Feder 18 übersteigt. Ein zweiseitig wirkendes System (Ausgleichsystem) ist notwendig, um sowohl bei Lenkbewegungen nach links als auch nach rechts einen Druckausgleich zu ermöglichen.

Während die Hülse 22 mit dem linken Dämpfelement 13 mit seinem Dichtungselement 12 und dem rechten Dämpfelement 10 mit seinem Dichtungselement 11 eine Einheit 23 bildet, ist der Boden 15 mit seinem Ventil (Ausgleichsystem) zu einer Einheit 24 zusammenfassbar. Die Hülse weist eine Außenseite 44 und eine Innenseite 45 auf. Im vorliegenden Ausführungsbeispiel umgibt die Hülse 22 den eine Außenseite 46 und eine Innenseite 47 aufweisenden Boden 15, wodurch im zusammengesetzten Zustand die Innenseite 45 der Hülse 22 der Außenseite 46 des Boden 15 zugewandt ist. Denkbar wäre auch, dass mindestens eine Nut alternativ oder ergänzend auf der Innenseite 47 des Bodens 15 angeordnet ist, so dass der Boden 15 die Hülse umgibt, wodurch im zusammengesetzten Zustand die Innenseite des Bodens 15 der Außenseite der Hülse zugewandt wäre. Dabei würde der Boden, um einen Verlust von Dämpfmedium (z.B. Fluid, Luft oder Gas) zu vermeiden, an seiner Innenseite einen oberen Dichtring und einen unteren Dichtring aufweisen.

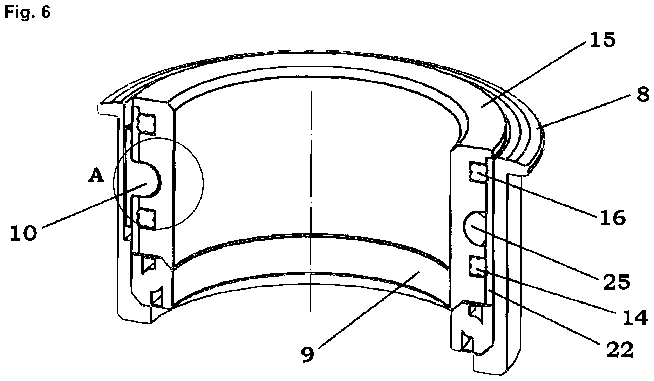

Fig. 6 zeigt eine perspektivische Schnittzeichnung einer erfindungsgemäßen Lagereinheit. Durch Rotation des Bodens 15, der zusammen mit dem Lager 9 von der Lagerschale 8 umgeben ist, und/oder der Lagerschale 8 ist die Position des Dämpfelements bzw. der Dämpfelemente innerhalb der Nut 25 veränderbar. Denkbar ist somit, dass sich das Dämpfelement bzw. die Dämpfelemente innerhalb der Nut 25 bewegen und/oder dass durch eine Bewegung der Nut 25 eine Relativbewegung des Dämpfelements bzw. der Dämpfelemente stattfindet. Die erfindungsgemäße Lagereinheit kann beispielsweise als untere Funktionseinheit einer Steuerkopflagerung eingesetzt werden.

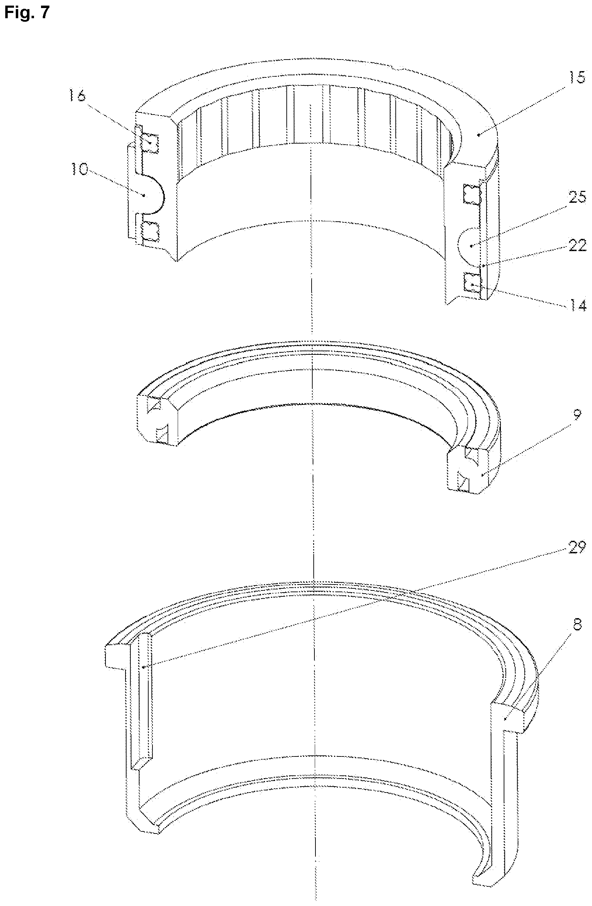

Fig. 7 zeigt eine perspektivische Explosivdarstellung der erfindungsgemäßen Lagereinheit, gemäß Fig. 6. Die Lagerschale 8 weist eine Nut 29 für das rechte Dämpfelement 10 auf.

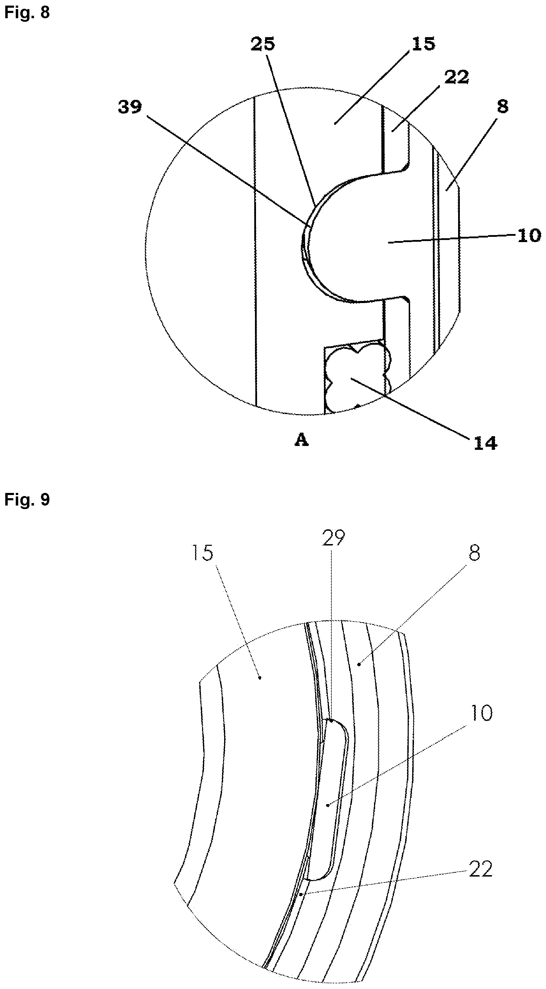

Fig. 8 zeigt ein Dämpfelement, gemäß dem Ausschnitt A aus Fig. 6. Zwischen dem beispielhaft dargestellten Dämpfelement 10 (bzw. den Dämpfelementen) und der Nut 25 befindet sich ein Spalt 39, wodurch das Umströmen des Dämpfmediums um das Dämpfelement (bzw. die Dämpfelemente) ermöglicht wird.

Fig. 9 zeigt eine Detailansicht einer erfindungsgemäßen Lagereinheit von oben. Deutlich wird hierbei, dass durch die Nut 29 das rechte Dämpfelement 10 und damit auch die Hülse 22 lagestabil an der Lagerschale 8 angeordnet ist.

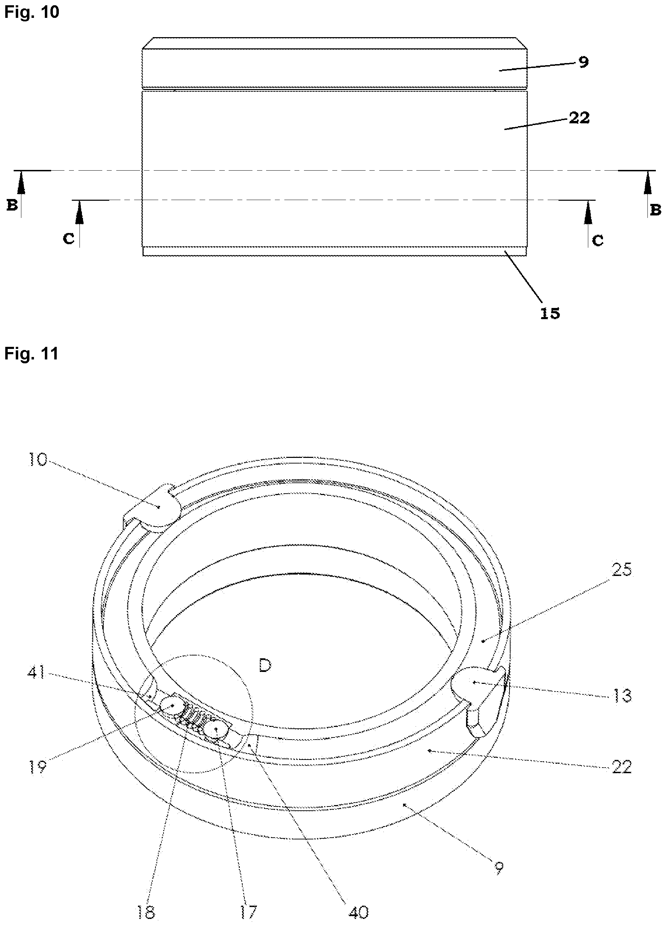

Fig. 10 zeigt eine Seitenansicht auf die Hülse 22, den Boden 15 und das Lager 9 einer erfindungsgemäßen Lagereinheit, der beispielsweise als untere Funktionseinheit einer Steuerkopflagerung einsetzbar ist.

Fig. 11 zeigt eine perspektivische Schnittzeichnung, gemäß der Linie B-B aus Fig. 10. Deutlich sichtbar ist ein linker Anschlag 40 und ein rechter Anschlag 41. Der linke Anschlag 40 dient als Endanschlag für ein Dämpfelement.10 und der rechter Anschlag 41 dient als Endanschlag für ein Dämpfelement 13. Denkbar wäre auch, dass mindestens ein Anschlag durch eine Verstelleinrichtung verstellt werden kann, so dass die Position des Anschlags innerhalb der Nut 25 verändert werden kann, wodurch der Drehwinkel beeinflusst wird.

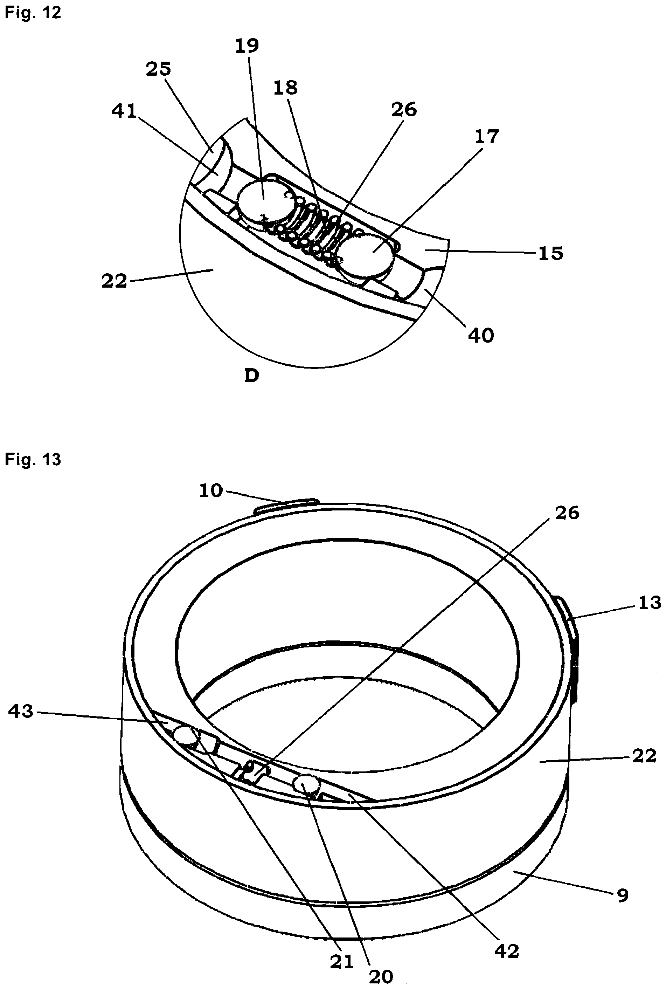

Fig. 12 zeigt ein Ventil, gemäß dem Ausschnitt D aus Fig. 10. Das Ventil besteht aus einer linken Ausrückkugel 17, einer rechten Ausrückkugel 19 und einer dazwischen angeordnete Feder 18. Durch Zusammendrücken der Feder 18 kann das Dämpfmedium in eine Ausgleichskammer 26 einströmen.

Fig. 13 zeigt eine perspektivische Schnittzeichnung s, gemäß der Linie C-C aus Fig. 10. Sichtbar ist eine die linke Sperrkugel 20, eine rechte Sperrkugel 21, ein linker Rücklauf 42 und ein rechter Rücklauf 43. Der linke Rücklauf 42 und der rechte Rücklauf 43 dienen dazu, dass das in der Ausgleichskammer 26 befindliche Dämpfmedium aus der Ausgleichskammer 26 in die Nut 25 strömen kann. Im gezeigten Fall befindet sich die linke Sperrkugel 20 in der Sperrstellung, so dass, da sich die rechte Sperrkugel 21 durch den durch das linke Dämpfelement 13 erzeugten Druck nicht in der Sperrstellung befindet, das Dämpfmedium aus der Ausgleichskammer 26 durch den rechten Rücklauf 43 strömen kann.

Fig. 14 zeigt eine perspektivische Darstellung eines Bodens 15 mit Ventil (Ausgleichsystem).

Fig. 15 zeigt eine perspektivische Explosivdarstellung eines Bodens 15. Durch die linke Ausrückkugel 17, die rechte Ausrückkugel 19 und die dazwischen angeordnete Feder 18 funktioniert der Überdruckausgleich in zwei Richtungen.

Fig. 16 zeigt einen Boden 15 im Schnitt. Hierbei ist das Ausgleichsystem in unbestätigtem Zustand dargestellt. Hierbei befinden sich die rechte Ausrückkugel 19, die linke Ausrückkugel 17, die linke Sperrkugel 20 und die rechte Sperrkugel 21 in Sperrstellung.

Fig. 17 zeigt ein Schaubild einer Dämpferkurve mit Druckbegrenzung. Das sich durch aus Dämpferkurve und Maximaldruck-Beschränkung ergebende Diagramm führt zu einer charakteristischen Dämpferkurve, die als Gesamtsystem bezeichnet ist.

Fig. 18 zeigt einen Boden 15 im Schnitt. Hierbei ist das Ausgleichsystem im betätigtem Zustand dargestellt. Der Betätigungsvorgang, der im Folgenden aus einer Richtung beschrieben wird, findet statt, indem das linke Dämpfelement 13 kreisförmig durch die Nut 25 bewegt wird und einen Druck des Dämpfmediums in der Nut 25 aufbaut. Dieser Druck wirkt auf die Fläche der rechten Sperrkugel 20 und erzeugt eine von der Fläche der Sperrkugel 21 abhängige Kraft, die der Federkraft der Feder 18 entgegenwirkt.

Übersteigt dieser Druck die Federvorspannung der Feder 18, entweicht diese in eine Ausgleichskammer 26. Infolgedessen wird ein Kanal zwischen der Nut 25 und der Ausgleichskammer 26 freigelegt. Der Überdruck in der Ausgleichskammer 26 wirkt auf die beiden Sperrkugeln, wobei nur die linke Sperrkugel 20 in Öffnungsposition ausrückt, da auf die rechte Sperrkugel 21 zusätzlich ein äußerer Druck aus der Nut 25 wirkt. Es stellt sich ein als Pfeil dargestellter Druckausgleich 27 zwischen der Nut 25, der Ausgleichskammer 26 und der an die linke Sperrkugel 20 angrenzenden Nut 25 ein.

Während sich bei der in Fig. 18 gezeigten Betätigung des Ausgleichssystems von rechts die rechte Sperrkugel 21 und die linke Ausrückkugel 17 in Sperrstellung befinden, befinden sich die linke Sperrkugel 20 und die rechte Ausrückkugel 19 in der Öffnungsstellung.

Bei einer Betätigung des Ausgleichssystems von links würden sich die linke Sperrkugel 20 und die rechte Ausrückkugel 19 in Sperrstellung und die rechte Sperrkugel 21 und die linke Ausrückkugel 17 in der Öffnungsstellung befinden.

Die Erfindung erzeugt eine Dämpfung der Lenkbewegung, wobei die beiden Endlagen durch einen an den beiden Seiten des Ausgleichssystems befindlichen Anschlag begrenzt sind.

Fig. 19 zeigt eine perspektivische Darstellung einer Lagerschale 8. Die Lagerschale 8 weist eine Nut 28 für das linke Dämpfelement 13 und die Nut 29 für das rechte Dämpfelement 10 auf.

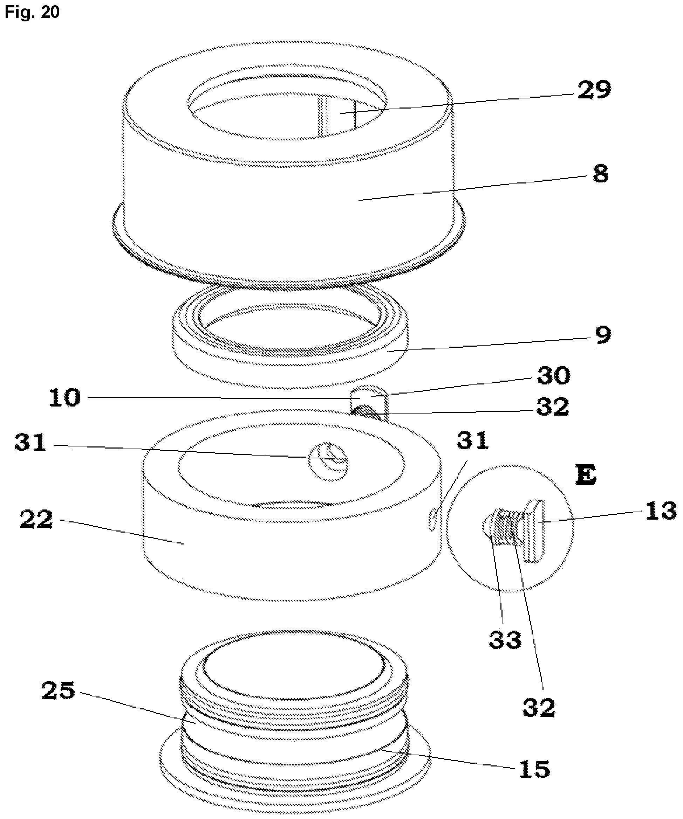

Fig. 20 zeigt eine weitere perspektivische Explosivdarstellung einer erfindungsgemäßen Lagereinheit, die beispielsweise als untere Funktionseinheit einer Steuerkopflagerung einsetzbar ist. In diesem Ausführungsbeispiel ist an einem einen Kopf 30 aufweisenden Dämpfelement, das in eine Öffnung 31 einführbar ist, eine Feder 32 angeordnet, die sich einerseits an einer Anlage 33 abstützt.

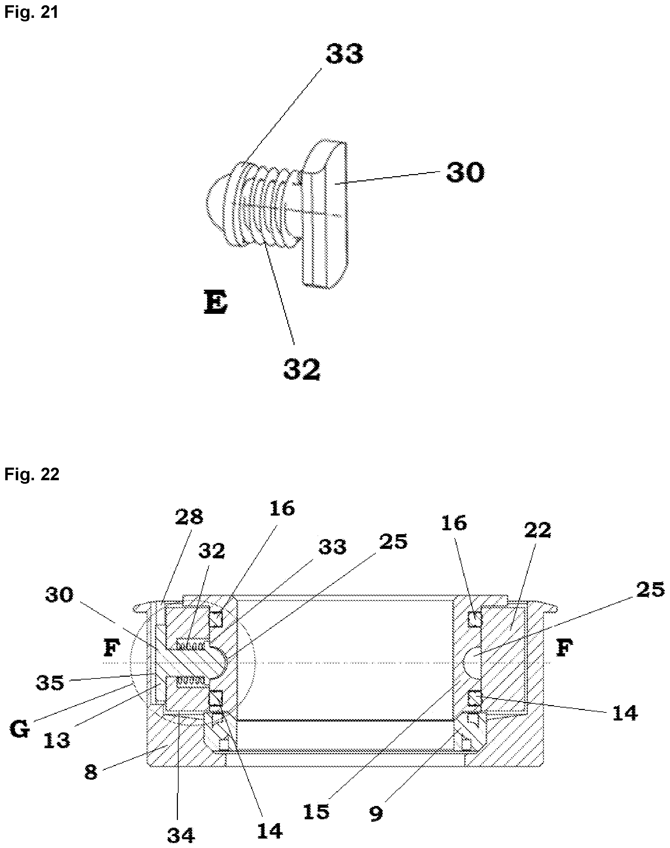

Fig. 21 zeigt ein Dämpfelement, gemäß dem Ausschnitt E aus Fig. 20.

Fig. 22 zeigt eine Schnittzeichnung der erfindungsgemäßen Lagereinheit, gemäß Fig. 20. Die Feder 32 bewirkt in der dargestellten Position mittels der Anlage 33 eine Abdichtung einer Kammer 34 hin zur Nut 25, so dass ein in der Nut 25 befindliche Dämpfmedium bis zu einem gewissen Druck nicht in die Kammer 34 entweichen kann. Bei zunehmenden Anstieg des Druckes in der Nut 25 weicht das als Ventil wirkende Dämpfelement, dessen Kopf 30 sich in der Kammer 35 bewegen kann, radial aus, wodurch das Dämpfmedium in die Kammer 34 strömen kann. Dadurch ergibt sich ein alternatives oder zusätzliches Ausgleichssystem zu dem oben beschriebenen Ausgleichssystem. Denkbar ist auch, dass nur ein Dämpfelement mit einer Feder 32 ausgestattet ist. Auch denkbar ist, dass zur Bereitstellung eines Ausgleichssystems an dem Boden 15 mindestens ein Ventil angeordnet ist, das kein Dämpfelement ist.

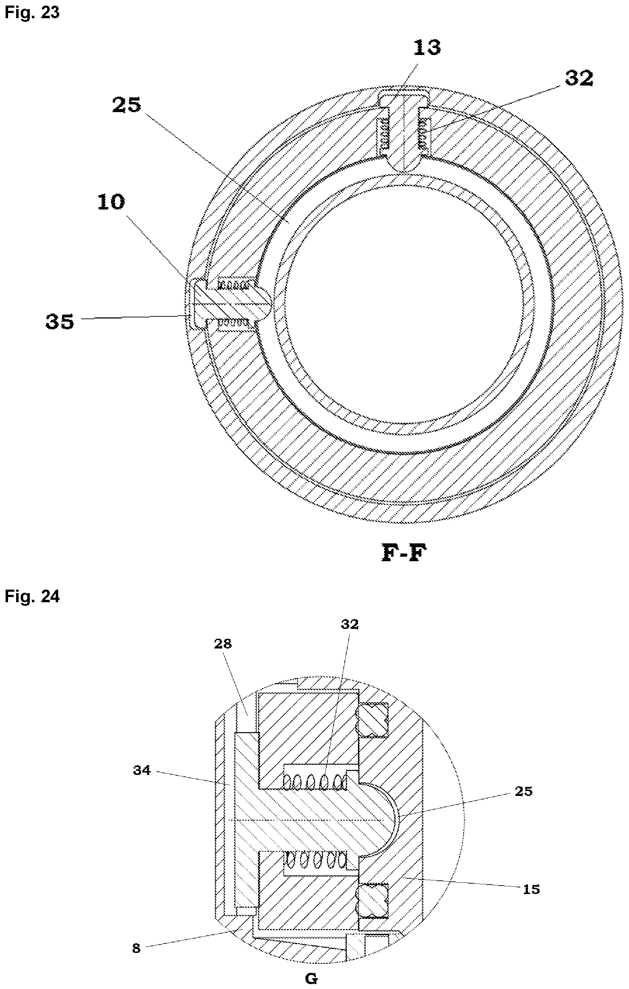

Fig. 23 zeigt eine Schnittzeichnung der erfindungsgemäßen Lagereinheit, gemäß der Linie F-F aus Fig. 20.

Fig. 24 zeigt einen vergrößerten Ausschnitt G aus Fig. 22.

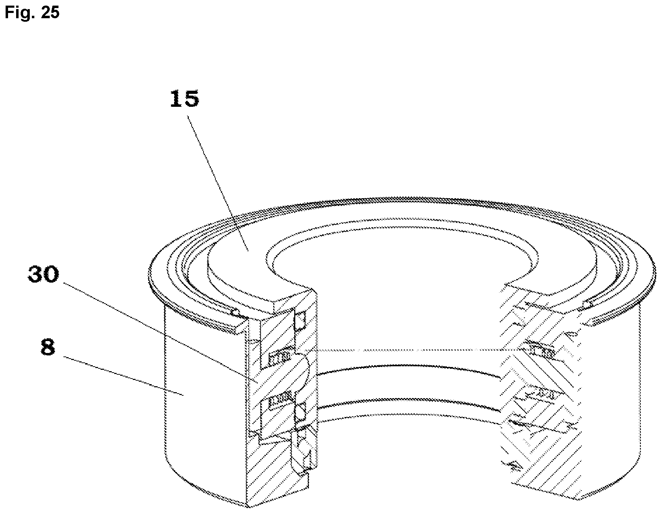

Fig. 25 zeigt eine teilweise als Schnitt dargestellte perspektivische Darstellung der erfindungsgemäßen Lagereinheit, gemäß Fig. 20.

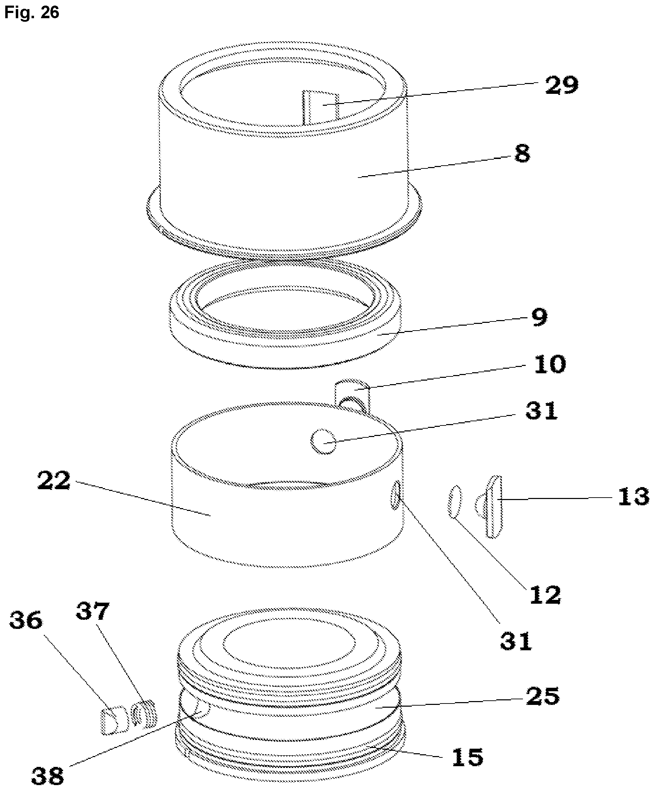

Fig. 26 zeigt eine weitere perspektivische Explosivdarstellung einer erfindungsgemäßen Lagereinheit, die beispielsweise als untere Funktionseinheit einer Steuerkopflagerung einsetzbar ist. In diesem Ausführungsbeispiel ist an dem Boden 15 innerhalb der Nut 25 ein Anschlag 36, der durch eine Feder 37 belastet ist, angeordnet. Ein sich in der Nut 25 auf den Anschlag 36 zu bewegendes Dämpfelement bewirkt, dass bei Erreichen des Anschlages 36 der Anschlag 36 aufgrund seiner Geometrie gegen die Feder 37 in eine Öffnung 38 weggedrückt wird, wodurch das Dämpfelement über dem Anschlag 36 hinwegstreichen kann. Dies ermöglicht eine 360°-Drehbeweglichkeit ohne Anschlagfunktion, da die erfindungsgemäße Gestaltung dieses Ausführungsbeispiels kann nun auch eine oszillierende Bewegung dämpfen kann, wie sie zum Beispiel bei der Bewegung eines Lenkers oder Lenkrads auftritt. Diese Bewegung wird, wie in den bisherigen Ausführungsbeispielen gezeigt, in ihren Endlagen durch einen Anschlag begrenzt. Soll aber eine 360°-Drehbewegung gedämpft werden, ist eine durchgängige Nut 25 notwendig. Entsprechend der Beschreibung des Ausführungsbeispiels werden ein oder mehrere Dämpfelemente, nämlich bevorzugt das rechte Dämpfelement 10 und das linke Dämpfelement 13, durch eine mit einem Dämpfmedium (z.B. Fluid, Luft oder Gas) gefüllte Nut 25 bewegt, wobei der für die Funktion des Dämpfers notwendige Gegendruck durch einen Anschlag 36, der beispielsweise ein gefederter Ausrückbolzen sein kann, ermöglicht wird. Dieser gefederte Ausrückbolzen weicht bei Überfahren des Dämpfelements radial aus, wodurch die 360°-Bewegung ermöglicht wird. Denkbar ist auch, dass der Anschlag nach oben, unten und/oder seitlich wegschwenkt, um ein Passieren des Dämpfelements zu ermöglichen.

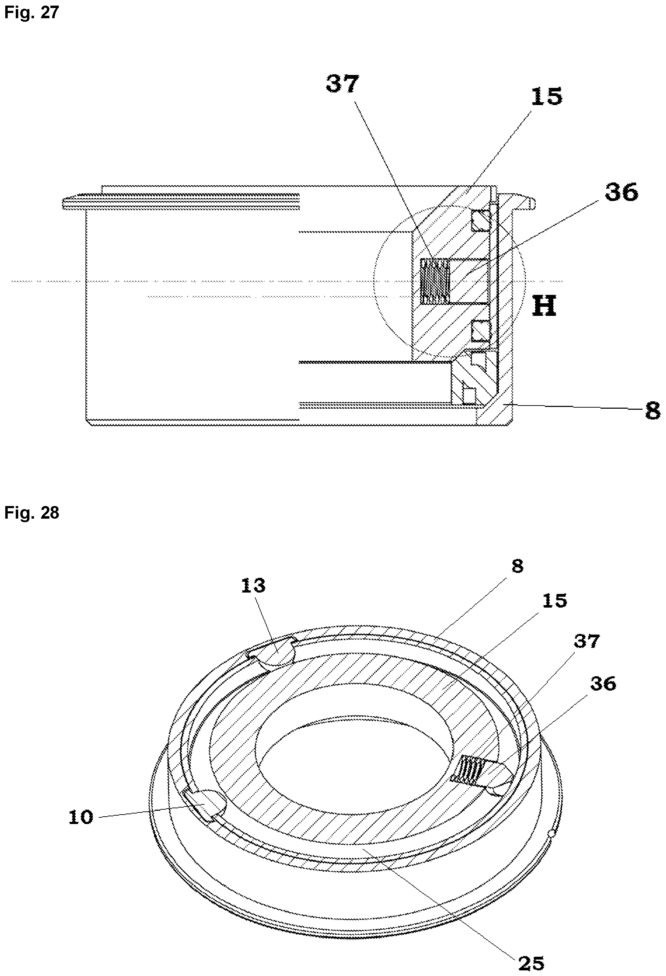

Fig. 27 zeigt eine teilweise als Schnitt dargestellte Seitenansicht der erfindungsgemäßen Lagereinheit, gemäß Fig. 26.

Fig. 28 zeigt eine teilweise als Schnitt dargestellte perspektivische Darstellung der erfindungsgemäßen Lagereinheit, gemäß Fig. 26.

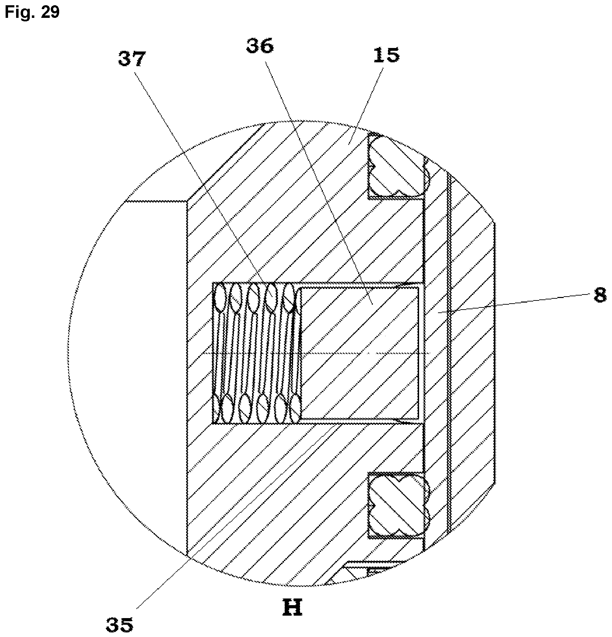

Fig. 29 zeigt einen vergrößerten Ausschnitt H aus Fig. 27.

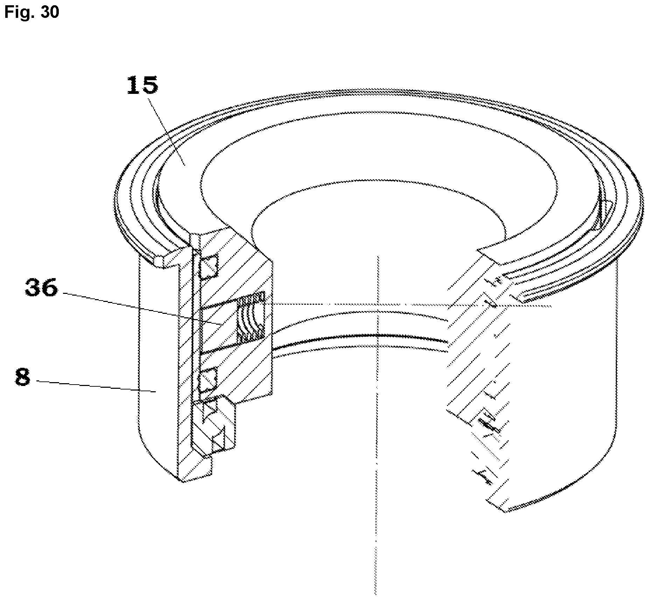

Fig. 30 zeigt eine teilweise als Schnitt dargestellte perspektivische Darstellung der erfindungsgemäßen Lagereinheit, gemäß Fig. 26, im zusammengesetzten Zustand.

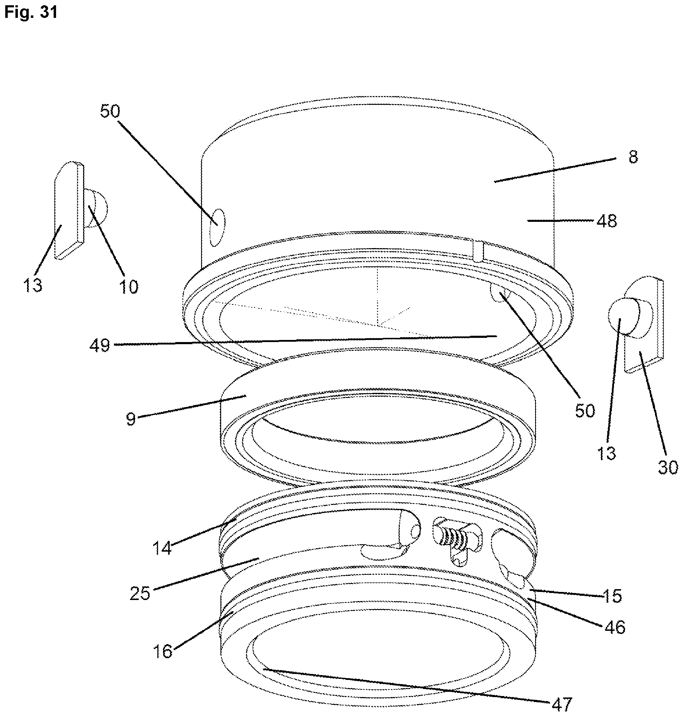

Fig. 31 zeigt eine perspektivische Explosionsdarstellung eines anderen Ausführungsbeispiels einer erfindungsgemäßen Lagereinheit. Im Gegensatz zu der in Fig. 5 gezeigten erfindungsgemäßen Lagereinheit weist die in Fig. 31 gezeigte erfindungsgemäße Lagereinheit keine Hülse auf, so dass die Funktion der Hülse von der Lagerschale 8 übernommen wird. Dazu weist die Lagerschale 8, die eine Außenseite 48 und eine Innenseite 49 aufweist, Öffnungen 50 auf, in die die Dämpfelemente 10 und 13 einführbar sind. Denkbar wäre es, dass im Bereich der Öffnungen 50 an der Außenseite 48 Vertiefungen angeordnet sind, die zur Aufnahme des Kopfes 30 dienen, wodurch der Kopf 30 an der Außenseite 48 nicht oder zumindest weniger aufträgt. Denkbar wäre es auch, dass an der Innenseite 49 mindestens eine Nut angeordnet ist, in der ein Dämpfelement 10 und/oder ein Dämpfelement 13 angeordnet ist. Denkbar wäre auch, dass mindestens eine an der Innenseite 49 angeordnete Nut mit einer Nut 25, die am Boden angeordnet ist, korrespondiert, so dass ein Dämpfelement 10 und/oder ein Dämpfelement 13 auch bis in die Nut 25 ragt. Hierbei würde die Lagerschale 8 zumindest auch einen Teil der Funktionen des Bodens 15 übernehmen. Denkbar wäre auch, dass der Boden 15 keine Nut 25 aufweist, so dass eine eine Nut aufweisende Lagerschale 8 die diesbezügliche Funktion übernimmt. Denkbar wäre auch eine erfindungsgemäße Lagereinheit, die sowohl eine Hülse 22, die mindestens eine Öffnung 31 für ein Dämpfelement, das in eine am Boden 15 angeordnete Nut 25 ragt, aufweist, als auch eine Lagerschale 8 aufweist, die mindestens eine Öffnung 50 für ein Dämpfelement das in eine an der Lagerschale 8 angeordnete Nut oder in eine am Boden 15 angeordnete Nut 25 ragt, aufweist. Denkbar wäre hierbei, dass die Nut 25 und die an der Lagerschale 8 angeordnete Nut miteinander verbunden sind oder keine Verbindung aufweisen.

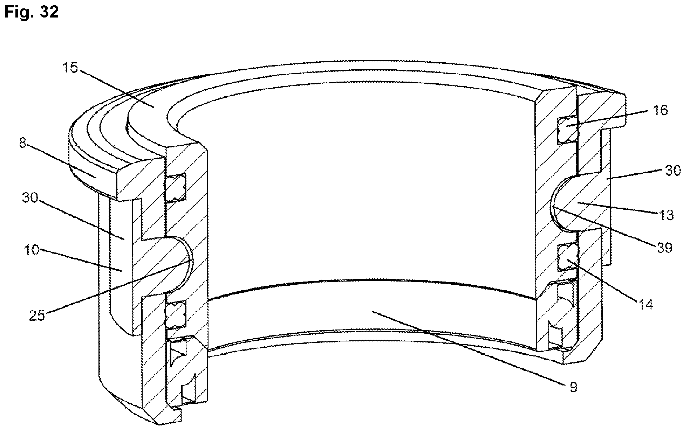

Fig. 32 zeigt eine perspektivische Schnittzeichnung einer erfindungsgemäßen Lagereinheit, gemäß Fig. 31.

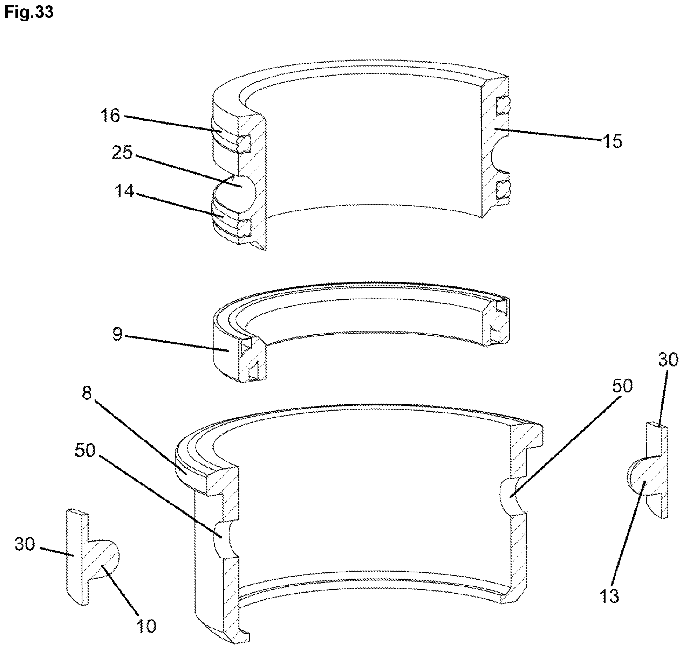

Fig. 33 zeigt eine perspektivische Explosivdarstellung der erfindungsgemäßen Lagereinheit, gemäß Fig. 31.

### Bezugszahlenliste

- 1: Einstellschraube
- 2: Spanndeckel
- 3: Cover
- 4: Klemmring
- 5: Obere Lagerschale mit Lager
- 6: Spannkralle
- 7: Steuerrohr (Fahrradrahmen)
- 8: Lagerschale
- 9: Lager
- 10: Rechtes Dämpfelement
- 11: Dichtungselement
- 12: Dichtungselement
- 13: Linkes Dämpfelement
- 14: Oberer Dichtring
- 15: Boden
- 16: Unterer Dichtring
- 17: Linke Ausrückkugel
- 18: Feder
- 19: Rechte Ausrückkugel
- 20: Linke Sperrkugel
- 21: Rechte Sperrkugel
- 22: Hülse
- 23: Einheit Hülse mit Dämpfer
- 24: Einheit Boden mit Ventil
- 25: Nut für Dämpfelement
- 26: Ausgleichskammer
- 27: Druckausgleich
- 28: Nut für linkes Dämpfelement
- 29: Nut für rechtes Dämpfelement
- 30: Kopf
- 31: Öffnung
- 32: Feder
- 33: Anlage
- 34: Kammer
- 35: Kammer
- 36: Anschlag
- 37: Feder
- 38: Öffnung
- 39: Spalt
- 40: Linker Anschlag
- 41: Rechter Anschlag
- 42: Linker Rücklauf
- 43: Rechter Rücklauf
- 44: Außenseite
- 45: Innenseite
- 46: Außenseite
- 47: Innenseite
- 48: Außenseite
- 49: Innenseite
- 50: Öffnung

## Patentansprüche

1. Lagereinheit, insbesondere Lagereinheit für ein Zweirad,
- mit einer Lagerschale (8), die eine Außenseite (48) und eine Innenseite (49) aufweist und in der zumindest ein eine Außenseite (46) und eine Innenseite (47) aufweisenden Boden (15) und mindestens ein Lager (9) angeordnet sind, wobei der Boden (15) mindestens eine Nut (25) aufweist,
**dadurch gekennzeichnet,**
**dass** in der Nut (25) mindestens ein Anschlag (36, 40, 41) und/oder zumindest teilweise mindestens ein Dämpfelement (10, 13) und/oder mindestens ein Dämpfmedium angeordnet ist, wobei mindestens eine Nut (25) an der Außenseite (46) und/oder mindestens eine Nut (25) an der Innenseite (47) des Bodens (15) angeordnet ist und mindestens eine Nut (25) von einer Hülse (22) und/oder der Lagerschale (8) überdeckt ist, und/oder
die Lagerschale (8) mindestens eine durchgehende Öffnung (50) von der Außenseite (48) zur Innenseite (49) aufweist, in der mindestens ein Anschlag und/ oder zumindest teilweise mindestens ein Dämpfelement und/oder mindestens ein Dämpfmedium angeordnet ist,
und/oder
die Lagerschale (8) an der Innenseite (49) mindestens eine Nut aufweist, in der mindestens ein Anschlag und/oder zumindest teilweise mindestens ein Dämpfelement und/oder mindestens ein Dämpfmedium angeordnet ist.

2. Lagereinheit, nach Anspruch 1,
**dadurch gekennzeichnet,**
**dass** in der Lagerschale (8) zumindest teilweise mindestens eine eine Außenseite (44) und eine Innenseite (45) aufweisende Hülse (22) angeordnet ist.

3. Lagereinheit, nach Anspruch 1 oder Anspruch 2,
**dadurch gekennzeichnet,**
**dass** zwischen einem in einer Nut (25) befindlichen Dämpfelement (10, 13) und der Nut (25) ein Spalt (39) angeordnet ist.

4. Lagereinheit, nach einem der vorhergehenden Ansprüche,
**dadurch gekennzeichnet,**
**dass** mindestens eine Nut (25) mindestens ein Dämpfmedium enthält.

5. Lagereinheit, nach einem der vorhergehenden Ansprüche,
**dadurch gekennzeichnet,**
**dass** die Lagereinheit mindestens ein Ausgleichssystem zur zumindest temporären Aufnahme mindestens eines Dämpfmediums aufweist.

6. Lagereinheit, nach einem der vorhergehenden Ansprüche,
**dadurch gekennzeichnet,**
**dass** mindestens ein Dämpfelement (10, 13) in einer Kammer (34) angeordnet ist.

7. Lagereinheit, nach einem der vorhergehenden Ansprüche,
**dadurch gekennzeichnet,**
**dass** mindestens ein Dämpfelement (10, 13) eine Feder (32) und/oder einen Anschlag (33) aufweist.

8. Lagereinheit, nach einem der vorhergehenden Ansprüche,
**dadurch gekennzeichnet,**
**dass** mindestens ein Anschlag (36) beweglich in der Nut (25) angeordnet ist.

9. Lagereinheit, nach einem der vorhergehenden Ansprüche,
**dadurch gekennzeichnet,**
**dass** die Lagereinheit mindestens einen Gegendruckraum aufweist.

10. Lagereinheit, nach einem der vorhergehenden Ansprüche,
**dadurch gekennzeichnet,**
**dass** die Lagereinheit ein Schwingungsdämpfer und/oder ein Drehwinkelbegrenzer ist.

11. Verfahren zum Einsatz einer Lagereinheit, die eine Lagerschale (8) aufweist, die eine Außenseite (48) und eine Innenseite (49) aufweist und in der zumindest teilweise ein eine Außenseite (46) und eine Innenseite (47) aufweisenden Boden (15) und mindestens ein Lager (9) angeordnet sind, wobei der Boden (15) mindestens eine Nut (25) aufweist,
**dadurch gekennzeichnet,**
**dass** in der Nut (25) mindestens ein
Anschlag (36, 40, 41) und/oder zumindest teilweise mindestens ein Dämpfelement (10, 13) und/oder mindestens ein Dämpfmedium angeordnet ist, wobei mindestens eine Nut (25) an der Außenseite (46) und/oder mindestens eine Nut (25) an der Innenseite (47) des Bodens (15) angeordnet ist und mindestens eine Nut (25) von einer Hülse (22) und/oder der Lagerschale (8) überdeckt ist, und/oder
die Lagerschale (8) mindestens eine durchgehende Öffnung (50) von der Außenseite (48) zur Innenseite (49) aufweist, in der mindestens ein Anschlag und/ oder zumindest teilweise mindestens ein Dämpfelement und/oder mindestens ein Dämpfmedium angeordnet ist,
und/oder
die Lagerschale (8) an der Innenseite (49) mindestens eine Nut aufweist, in der mindestens ein Anschlag und/oder zumindest teilweise mindestens ein Dämpfelement und/oder mindestens ein Dämpfmedium angeordnet ist,
wodurch die Lagereinheit als Drehwinkelbegrenzer einsetzbar ist, da ein durch die Lagereinheit ermöglichter Drehwinkel eines mit der Lagereinheit verbundenen Bauteils durch mindestens einen Endanschlag begrenzt wird, und/oder die Lagereinheit als Schwingungsdämpfer einsetzbar ist, da eine durch die Lagereinheit ermöglichte Drehbewegung eines mit der Lagereinheit verbundenen Bauteils gedämpft wird.

12. Verfahren, nach Anspruch 11,
**dadurch gekennzeichnet,**
**dass** die Lagereinheit in einer Steuerkopflagerung eines Fahrzeuges zum Einsatz kommt.

13. Verfahren, nach Anspruch 11 oder 12,
**dadurch gekennzeichnet,**
**dass** als Lagereinheit eine Lagereinheit, gemäß einem der Ansprüche 1 bis 10, eingesetzt wird.

14. Verfahren zur Funktionsbeeinflussung einer Lagereinheit, die eine Lagerschale (8) aufweist, die eine Außenseite (48) und eine Innenseite (49) aufweist und in der zumindest teilweise ein eine Außenseite (46) und eine Innenseite (47) aufweisenden Boden (15) und mindestens ein Lager (9) angeordnet sind, wobei der Boden (15) mindestens eine Nut (25) aufweist,
**dadurch gekennzeichnet,**
**dass** in der Nut (25) mindestens ein Anschlag (36, 40, 41) und/oder zumindest teilweise mindestens ein Dämpfelement (10, 13) und/oder mindestens ein Dämpfmedium angeordnet ist, wobei mindestens eine Nut (25) an der Außenseite (46) und/oder mindestens eine Nut (25) an der Innenseite (47) des Bodens (15) angeordnet ist und mindestens eine Nut (25) von einer Hülse (22) und/oder der Lagerschale (8) überdeckt ist,
und/oder
die Lagerschale (8) mindestens eine durchgehende Öffnung (50) von der Außenseite (48) zur Innenseite (49) aufweist, in der mindestens ein Anschlag und/ oder zumindest teilweise mindestens ein Dämpfelement und/oder mindestens ein Dämpfmedium angeordnet ist,
und/oder
die Lagerschale (8) an der Innenseite (49) mindestens eine Nut aufweist, in der mindestens ein Anschlag und/oder zumindest teilweise mindestens ein Dämpfelement und/oder mindestens ein Dämpfmedium angeordnet ist,
wodurch die Lagereinheit als Drehwinkelbegrenzer einsetzbar ist, da ein durch die Lagereinheit ermöglichter Drehwinkel eines mit der Lagereinheit verbundenen Bauteils durch mindestens einen Endanschlag begrenzt wird, und/oder die Lagereinheit als Schwingungsdämpfer einsetzbar ist, da eine durch die Lagereinheit ermöglichte Drehbewegung eines mit der Lagereinheit verbundenen Bauteils gedämpft wird,
wobei der Drehwinkel durch Auswahl einer geeigneten Hülse (22), in der mindestens ein Dämpfelement (10, 13) angeordnet ist, und/oder einer geeigneten Lagerschale (8), in der mindestens ein Dämpfelement angeordnet ist, beeinflusst wird
und/oder
wobei der Drehwinkel durch Veränderung der Position eines in einer Nut (25) angeordneten Anschlags (36, 40, 41) beeinflusst wird
und/oder
wobei die Dämpfwirkung durch Auswahl eines geeigneten Dämpfmediums beeinflusst wird
und/oder
wobei die Dämpfwirkung durch Beeinflussung der Eigenschaften eines Dämpfmediums durch Erwärmung, durch Kühlung, durch mindestens ein magnetisches Feld und/oder durch mindestens ein elektrisches Feld beeinflusst wird.

15. Verfahren, nach Anspruch 14,
**dadurch gekennzeichnet,**
**dass** als Lagereinheit eine Lagereinheit, gemäß einem der Ansprüche 1 bis 10, eingesetzt wird und/oder das Verfahren bei einem Verfahren zum Einsatz eines Lagereinheit, gemäß einem der Ansprüche 11 bis 13, eingesetzt wird.

16. Schwingungsdämpfer, insbesondere Schwingungsdämpfer für ein Zweirad,
- mit einer Lagerschale (8), die eine Außenseite (48) und eine Innenseite (49) aufweist und in der zumindest teilweise ein eine Außenseite (46) und eine Innenseite (47) aufweisenden Boden (15) und mindestens ein Lager (9) angeordnet sind, wobei der Boden (15) mindestens eine Nut (25) aufweist,
**dadurch gekennzeichnet,**
**dass** in der Nut (25) mindestens ein Anschlag (36, 40, 41) und/oder zumindest teilweise mindestens ein Dämpfelement (10, 13) und/oder mindestens ein Dämpfmedium angeordnet ist, wobei mindestens eine Nut (25) an der Außenseite (46) und/oder mindestens eine Nut (25) an der Innenseite (47) des Bodens (15) angeordnet ist und mindestens eine Nut (25) von einer Hülse (22) und/oder der Lagerschale (8) überdeckt ist,
und/oder
die Lagerschale (8) mindestens eine durchgehende Öffnung (50) von der Außenseite (48) zur Innenseite (49) aufweist, in der mindestens ein Anschlag und/ oder zumindest teilweise mindestens ein Dämpfelement und/oder mindestens ein Dämpfmedium angeordnet ist,
und/oder
die Lagerschale (8) an der Innenseite (49) mindestens eine Nut aufweist, in der mindestens ein Anschlag und/oder zumindest teilweise mindestens ein Dämpfelement und/oder mindestens ein Dämpfmedium angeordnet ist.

17. Schwingungsdämpfer, nach Anspruch 16,
**dadurch gekennzeichnet,**
**dass** in der Lagerschale (8) zumindest teilweise mindestens eine eine Außenseite (44) und eine Innenseite (45) aufweisende Hülse (22) angeordnet ist.

18. Schwingungsdämpfer, nach Anspruch 16 oder Anspruch 17,
**dadurch gekennzeichnet,**
**dass** mindestens eine Nut (25) an der Außenseite (44) und/oder mindestens eine Nut (25) an der Innenseite (45) des Bodens (15) angeordnet ist.

19. Schwingungsdämpfer, nach einem der Ansprüche 16 bis 18,
**dadurch gekennzeichnet,**
**dass** mindestens eine Nut (25) von einer Hülse (22) und/oder der Lagerschale (8) überdeckt ist.

20. Schwingungsdämpfer, nach einem der Ansprüche 16 bis 19,
**dadurch gekennzeichnet,**
**dass** zwischen einem in einer Nut (25) befindlichen Dämpfelement (10, 13) und der Nut (25) ein Spalt (39) angeordnet ist.

21. Schwingungsdämpfer, nach einem der Ansprüche 16 bis 20,
**dadurch gekennzeichnet,**
**dass** mindestens eine Nut (25) mindestens ein Dämpfmedium enthält.

22. Schwingungsdämpfer, nach einem der Ansprüche 16 bis 21,
**dadurch gekennzeichnet,**
**dass** der Schwingungsdämpfer mindestens ein Ausgleichssystem zur zumindest temporären Aufnahme mindestens eines Dämpfmediums aufweist.

23. Schwingungsdämpfer, nach einem der Ansprüche 16 bis 22,
**dadurch gekennzeichnet,**
**dass** mindestens ein Dämpfelement (10, 13) in einer Kammer (34) angeordnet ist.

24. Schwingungsdämpfer, nach einem der Ansprüche 16 bis 23,
**dadurch gekennzeichnet,**
**dass** mindestens ein Dämpfelement (10, 13) eine Feder (32) und/oder einen Anschlag (33) aufweist.

25. Schwingungsdämpfer, nach einem der Ansprüche 16 bis 24,
**dadurch gekennzeichnet,**
**dass** mindestens ein Anschlag (36) beweglich in der Nut (25) angeordnet ist.

26. Schwingungsdämpfer, nach einem der Ansprüche 16 bis 25,
**dadurch gekennzeichnet,**
**dass** der Schwingungsdämpfer mindestens einen Gegendruckraum aufweist.

27. Schwingungsdämpfer, nach einem der Ansprüche 16 bis 26,
**dadurch gekennzeichnet,**
**dass** der Schwingungsdämpfer eine Lagereinheit, gemäß einem der Ansprüche 1 bis 10, aufweist.

28. Verfahren zum Einsatz eines Schwingungsdämpfers, der eine Lagerschale (8) aufweist, die eine Außenseite (48) und eine Innenseite (49) aufweist und in der zumindest teilweise ein eine Außenseite (46) und eine Innenseite (47) aufweisenden Boden (15) und mindestens ein Lager (9) angeordnet sind, wobei der Boden (15) mindestens eine Nut (25) aufweist,
**dadurch gekennzeichnet,**
**dass** in der Nut (25) mindestens ein Anschlag (36, 40, 41) und/oder zumindest teilweise mindestens ein Dämpfelement (10, 13) und/oder mindestens ein Dämpfmedium angeordnet ist, wobei mindestens eine Nut (25) an der Außenseite (46) und/oder mindestens eine Nut (25) an der Innenseite (47) des Bodens (15) angeordnet ist und mindestens eine Nut (25) von einer Hülse (22) und/oder der Lagerschale (8) überdeckt ist, und/oder
die Lagerschale (8) mindestens eine durchgehende Öffnung (50) von der Außenseite (48) zur Innenseite (49) aufweist, in der mindestens ein Anschlag und/ oder zumindest teilweise mindestens ein Dämpfelement und/oder mindestens ein Dämpfmedium angeordnet ist,
und/oder
die Lagerschale (8) an der Innenseite (49) mindestens eine Nut aufweist, in der mindestens ein Anschlag und/oder zumindest teilweise mindestens ein Dämpfelement und/oder mindestens ein Dämpfmedium angeordnet ist,
wodurch ein durch den Schwingungsdämpfer ermöglichter Drehwinkel eines mit dem Schwingungsdämpfer verbundenen Bauteils durch mindestens einen Endanschlag begrenzt wird und/oder eine durch den Schwingungsdämpfer ermöglichte Drehbewegung eines mit dem Schwingungsdämpfer verbundenen Bauteils gedämpft wird.

29. Verfahren, nach Anspruch 28,
**dadurch gekennzeichnet,**
**dass** der Schwingungsdämpfer in einer Steuerkopflagerung eines Fahrzeuges zum Einsatz kommt.

30. Verfahren, nach Anspruch 28 oder Anspruch 29,
**dadurch gekennzeichnet,**
**dass** als Schwingungsdämpfer ein Schwingungsdämpfer, gemäß einem der Ansprüche 16 bis 27, eingesetzt wird.

31. Verfahren zur Funktionsbeeinflussung eines Schwingungsdämpfers, der eine Lagerschale (8) aufweist, die eine Außenseite (48) und eine Innenseite (49) aufweist und in der zumindest teilweise mindestens ein eine Außenseite (46) und eine Innenseite (47) aufweisenden Boden (15) und mindestens ein Lager (9) angeordnet sind, wobei der Boden (15) mindestens eine Nut (25) aufweist, **dadurch gekennzeichnet,**
**dass** in der Nut (25) mindestens ein Anschlag (36, 40, 41) und/oder zumindest teilweise mindestens ein Dämpfelement (10, 13) und/oder mindestens ein Dämpfmedium angeordnet ist, wobei mindestens eine Nut (25) an der Außenseite (46) und/oder mindestens eine Nut (25) an der Innenseite (47) des Bodens (15) angeordnet ist und mindestens eine Nut (25) von einer Hülse (22) und/oder der Lagerschale (8) überdeckt ist,
und/oder
die Lagerschale (8) mindestens eine durchgehende Öffnung (50) von der Außenseite (48) zur Innenseite (49) aufweist, in der mindestens ein Anschlag und/ oder zumindest teilweise mindestens ein Dämpfelement und/oder mindestens ein Dämpfmedium angeordnet ist,
und/oder
die Lagerschale (8) an der Innenseite (49) mindestens eine Nut aufweist, in der mindestens ein Anschlag und/oder zumindest teilweise mindestens ein Dämpfelement und/oder mindestens ein Dämpfmedium angeordnet ist,
wodurch ein durch den Schwingungsdämpfer ermöglichter Drehwinkel eines mit dem Schwingungsdämpfer verbundenen Bauteils durch mindestens einen Endanschlag begrenzt wird und/oder eine durch den Schwingungsdämpfer ermöglichte Drehbewegung eines mit dem Schwingungsdämpfer verbundenen Bauteils gedämpft wird, wobei der Drehwinkel durch Auswahl einer geeigneten Hülse (22), in der mindestens ein Dämpfelement (10, 13) angeordnet ist, und/oder einer geeigneten Lagerschale (8), in der mindestens ein Dämpfelement angeordnet ist, beeinflusst wird
und/oder
wobei der Drehwinkel durch Veränderung der Position eines in einer Nut (25) angeordneten Anschlags (36, 40, 41) beeinflusst wird
und/oder
wobei die Dämpfwirkung durch Auswahl eines geeigneten Dämpfmediums beeinflusst wird
und/oder
wobei die Dämpfwirkung durch Beeinflussung der Eigenschaften eines Dämpfmediums durch Erwärmung, durch Kühlung, durch mindestens ein magnetisches Feld und/oder durch mindestens ein elektrisches Feld beeinflusst wird.

32. Verfahren, nach Anspruch 31,
**dadurch gekennzeichnet,**
**dass** als Schwingungsdämpfer eine Schwingungsdämpfer, gemäß einem der Ansprüche 16 bis 27, eingesetzt wird und/oder das Verfahren bei einem Verfahren zum Einsatz eines Schwingungsdämpfers, gemäß einem der Ansprüche 28 bis 20, eingesetzt wird.

## Claims

1. A bearing unit, in particular a bearing unit for a two-wheeled vehicle,
- including a bearing shell (8) which has an outer surface (48) and an inner surface (49) and in which at least one bottom (15) having an outer surface (46) and an inner surface (47) as well as at least one bearing (9) are arranged, said bottom (15) having at least one groove (25),
**characterised in that**
said groove (25) has at least one stop (36, 40, 41) and/or, at least partially, at least one damping element (10, 13) and/or at least one damping medium arranged therein, with at least one groove (25) being arranged on the outer surface (46) and/or at least one groove (25) being arranged on the inner surface (47) of said bottom (15) and at least one groove (25) being covered by a sleeve (22) and/or by the bearing shell (8),
and/or
the bearing shell (8) has at least one through opening (50) which extends from the outer surface (48) to the inner surface (49) and in which at least one stop and/or, at least partially, at least one damping element and/or at least one damping medium are arranged,
and/or
the bearing shell (8) has at least one groove which is formed on its inner surface (49) and has at least one stop and/or, at least partially, at least one damping element and/or at least one damping medium arranged therein.

2. . The bearing unit as claimed in claim 1,
**characterised in that**
said bearing shell (8) has, at least partially, at least one sleeve (22) having an outer surface (44) and an inner surface (45) arranged therein.

3. . The bearing unit as claimed in claim 1 or claim 2,
**characterised in that**
a gap (39) is arranged between a damping element (10,13) located in a groove (25) and said groove (25).

4. . The bearing unit as claimed in any of the preceding claims,
**characterised in that**
at least one groove (25) contains at least one damping medium.

5. . The bearing unit as claimed in any of the preceding claims,
**characterised in that**
the bearing unit has at least one compensation system for at least temporarily accommodating at least one damping medium.

6. . The bearing unit as claimed in any of the preceding claims,
**characterised in that**
at least one damping element (10, 13) is arranged within a chamber (34).

7. . The bearing unit as claimed in any of the preceding claims,
**characterised in that**
at least one damping element (10, 13) has a spring (32) and/or a stop (33).

8. . The bearing unit as claimed in any of the preceding claims,
**characterised in that**
at least one stop (36) is movably arranged within the groove (25).

9. . The bearing unit as claimed in any of the preceding claims,
**characterised in that**
the bearing unit has at least one counterpressure chamber.

10. . The bearing unit as claimed in any of the preceding claims,
**characterised in that**
the bearing unit is a vibration damper and/or a rotation angle limiter.

11. . A method of employing a bearing unit including a bearing shell (8) which has an outer surface (48) and an inner surface (49) and in which, at least partially, at least one bottom (15) having an outer surface (46) and an inner surface (47) as well as at least one bearing (9) are arranged, said bottom (15) having at least one groove (25),
**characterised in that**
said groove (25) has at least one stop (36, 40, 41) and/or, at least partially, at least one damping element (10, 13) and/or at least one damping medium arranged therein, with at least one groove (25) being arranged on the outer surface (46) and/or at least one groove (25) being arranged on the inner surface (47) of said bottom (15) and at least one groove (25) being covered by a sleeve (22) and/or by the bearing shell (8),
and/or
the bearing shell (8) has at least one through opening (50) which extends from the outer surface (48) to the inner surface (49) and in which at least one stop and/or, at least partially, at least one damping element and/or at least one damping medium are arranged,
and/or
the bearing shell (8) has at least one groove which is formed on its inner surface (49) and has at least one stop and/or, at least partially, at least one damping element and/or at least one damping medium arranged therein,
whereby the bearing unit may be employed as a rotation angle limiter since a rotation angle of a component associated with the bearing unit which is enabled by said bearing unit will be limited by means of at least one limit stop, and/or whereby the bearing unit may be employed as a vibration damper since a rotational movement of a component associated with the bearing unit which is enabled by said bearing unit will be damped.

12. . The method as claimed in claim 11,
**characterised in that**
the bearing unit is employed in a steering head bearing of a vehicle.

13. . The method as claimed in claim 11 or claim 12,
**characterised in that**
the bearing unit employed is a bearing unit as claimed in any one of claims 1 to 10.

14. . A method of exerting an influence on the function of a bearing unit including a bearing shell (8) which has an outer surface (48) and an inner surface (49) and in which, at least partially, at least one bottom (15) having an outer surface (46) and an inner surface (47) as well as at least one bearing (9) are arranged, said bottom (15) having at least one groove (25),
**characterised in that**
said groove (25) has at least one stop (36, 40, 41) and/or, at least partially, at least one damping element (10, 13) and/or at least one damping medium arranged therein, with at least one groove (25) being arranged on the outer surface (46) and/or at least one groove (25) being arranged on the inner surface (47) of said bottom (15) and at least one groove (25) being covered by a sleeve (22) and/or by the bearing shell (8),
and/or
the bearing shell (8) has at least one through opening (50) which extends from the outer surface (48) to the inner surface (49) and in which at least one stop and/or, at least partially, at least one damping element and/or at least one damping medium are arranged, and/or
the bearing shell (8) has at least one groove which is formed on its inner surface (49) and has at least one stop and/or, at least partially, at least one damping element and/or at least one damping medium arranged therein,
whereby the bearing unit may be employed as a rotation angle limiter since a rotation angle of a component associated with the bearing unit which is enabled by said bearing unit will be limited by means of at least one limit stop, and/or whereby the bearing unit may be employed as a vibration damper since a rotational movement of a component associated with the bearing unit which is enabled by said bearing unit will be damped,
wherein an influence is exerted on the rotation angle by selecting a suitable sleeve (22) in which at least one damping element (10, 13) is arranged and/or by selecting a suitable bearing shell (8) in which at least one damping element is arranged,
and/or
wherein an influence is exerted on the rotation angle by changing the position of a stop (36, 40, 41) arranged within a groove (25),
and/or
wherein an influence is exerted on the damping action by selecting a suitable damping medium,
and/or
wherein an influence is exerted on the damping action by influencing the characteristics of a damping medium by heating, by cooling, by applying at least one magnetic field and/or by applying at least one electric field.

15. . The method as claimed in claim 14,
**characterised in that**
the bearing unit employed is a bearing unit as claimed in any one of claims 1 to 10 and/or the method is employed in the context of a method of employing a bearing unit as claimed in any one of claims 11 to 13.

16. . A vibration damper, in particular a vibration damper for a two-wheeled vehicle,
- including a bearing shell (8) which has an outer surface (48) and an inner surface (49) and in which, at least partially, at least one bottom (15) having an outer surface (46) and an inner surface (47) as well as at least one bearing (9) are arranged, said bottom (15) having at least one groove (25),
**characterised in that**
said groove (25) has at least one stop (36, 40, 41) and/or, at least partially, at least one damping element (10, 13) and/or at least one damping medium arranged therein, with at least one groove (25) being arranged on the outer surface (46) and/or at least one groove (25) being arranged on the inner surface (47) of said bottom (15) and at least one groove (25) being covered by a sleeve (22) and/or by the bearing shell (8),
and/or
the bearing shell (8) has at least one through opening (50) which extends from the outer surface (48) to the inner surface (49) and in which at least one stop and/or, at least partially, at least one damping element and/or at least one damping medium are arranged,
and/or
the bearing shell (8) has at least one groove which is formed on its inner surface (49) and has at least one stop and/or, at least partially, at least one damping element and/or at least one damping medium arranged therein.

17. . The vibration damper as claimed in claim 16,
**characterised in that**
said bearing shell (8) has, at least partially, at least one sleeve (22) having an outer surface (44) and an inner surface (45) arranged therein.

18. . The vibration damper as claimed in claim 16 or in claim 17,
**characterised in that**
at least one groove (25) is arranged on the outer surface (44) and/or at least one groove (25) is arranged on the inner surface (45) of the bottom (15).

19. . The vibration damper as claimed in any one of claims 16 to 18,
**characterised in that**
at least one groove (25) is covered by a sleeve (22) and/or by the bearing shell (8).

20. . The vibration damper as claimed in any one of claims 16 to 19,
**characterised in that**
a gap (39) is arranged between a damping element (10,13) located in a groove (25) and said groove (25).

21. . The vibration damper as claimed in any one of claims 16 to 20,
**characterised in that**
at least one groove (25) contains at least one damping medium.

22. . The vibration damper as claimed in any one of claims 16 to 21,
**characterised in that**
the vibration damper has at least one compensation system for at least temporarily accommodating at least one damping medium.

23. . The vibration damper as claimed in any one of claims 16 to 22,
**characterised in that**
at least one damping element (10, 13) is arranged within a chamber (34).

24. . The vibration damper as claimed in any one of claims 16 to 23,
**characterised in that**
at least one damping element (10, 13) has a spring (32) and/or a stop (33).

25. . The vibration damper as claimed in any one of claims 16 to 24,
**characterised in that**
at least one stop (36) is movably arranged within the groove (25).

26. . The vibration damper as claimed in any one of claims 16 to 25,
**characterised in that**
the vibration damper has at least one counterpressure chamber.

27. . The vibration damper as claimed in any one of claims 16 to 26,
**characterised in that**
the vibration damper has a bearing unit as claimed in any one of claims 1 to 10.

28. . A method of employing a vibration damper including a bearing shell (8) which has an outer surface (48) and an inner surface (49) and in which, at least partially, at least one bottom (15) having an outer surface (46) and an inner surface (47) as well as at least one bearing (9) are arranged, said bottom (15) having at least one groove (25), **characterised in that**
said groove (25) has at least one stop (36, 40, 41) and/or, at least partially, at least one damping element (10, 13) and/or at least one damping medium arranged therein, with at least one groove (25) being arranged on the outer surface (46) and/or at least one groove (25) being arranged on the inner surface (47) of said bottom (15) and at least one groove (25) being covered by a sleeve (22) and/or by the bearing shell (8),
and/or
the bearing shell (8) has at least one through opening (50) which extends from the outer surface (48) to the inner surface (49) and in which at least one stop and/or, at least partially, at least one damping element and/or at least one damping medium are arranged,
and/or
the bearing shell (8) has at least one groove which is formed on its inner surface (49) and has at least one stop and/or, at least partially, at least one damping element and/or at least one damping medium arranged therein,
whereby a rotation angle of a component associated with the vibration damper which is enabled by said vibration damper will be limited by means of at least one limit stop, and/or whereby a rotational movement of a component associated with the vibration damper which is enabled by said vibration damper will be damped.

29. . The method as claimed in claim 28,
**characterised in that**
the vibration damper is used in a steering head bearing of a vehicle.

30. . The method as claimed in claim 28 or claim 29,
**characterised in that**
the vibration damper employed is a vibration damper as claimed in any one of claims 16 to 27.

31. . A method for exerting an influence on the function of a vibration damper including a bearing shell (8) which has an outer surface (48) and an inner surface (49) and in which, at least partially, at least one bottom (15) having an outer surface (46) and an inner surface (47) as well as at least one bearing (9) are arranged, said bottom (15) having at least one groove (25),
**characterised in that**
said groove (25) has at least one stop (36, 40, 41) and/or, at least partially, at least one damping element (10, 13) and/or at least one damping medium arranged therein, with at least one groove (25) being arranged on the outer surface (46) and/or at least one groove (25) being arranged on the inner surface (47) of said bottom (15) and at least one groove (25) being covered by a sleeve (22) and/or by the bearing shell (8),
and/or
the bearing shell (8) has at least one through opening (50) which extends from the outer surface (48) to the inner surface (49) and in which at least one stop and/or, at least partially, at least one damping element and/or at least one damping medium are arranged,
and/or
the bearing shell (8) has at least one groove which is formed on its inner surface (49) and has at least one stop and/or, at least partially, at least one damping element and/or at least one damping medium arranged therein,
whereby a rotation angle of a component associated with the vibration damper which is enabled by said vibration damper will be limited by means of at least one limit stop, and/or whereby a rotational movement of a component associated with the vibration damper which is enabled by said vibration damper will be damped, wherein an influence is exerted on the rotation angle by selecting a suitable sleeve (22) in which at least one damping element (10, 13) is arranged and/or by selecting a suitable bearing shell (8) in which at least one damping element is arranged,
and/or
wherein an influence is exerted on the rotation angle by changing the position of a stop (36, 40, 41) arranged within a groove (25),
and/or
wherein an influence is exerted on the damping action by selecting a suitable damping medium,
and/or
wherein an influence is exerted on the damping action by influencing the characteristics of a damping medium by heating, by cooling, by applying at least one magnetic field and/or by applying at least one electric field.

32. . The method as claimed in claim 31,
**characterised in that**
the vibration damper employed is a vibration damper as claimed in any one of claims 16 to 27 and/or the method is employed in the context of a method of employing a vibration damper as claimed in any one of claims 28 to 30.

## Revendications

1. Unité de palier, en particulier unité de palier pour un deux-roues,
- pourvue d'un coussinet de palier (8) qui présente une face extérieure (48) et une face intérieure (49) et dans lequel sont disposés au moins un fond (15) présentant une face extérieure (46) et une face intérieure (47) ainsi qu'au moins un palier (9), le fond (15) présentant au moins une rainure (25),
**caractérisée en ce que**
dans la rainure (25) sont disposés au moins une butée (36, 40, 41) et/ou, au moins en partie, au moins un élément amortisseur (10, 13) et/ou au moins un média d'amortissement, au moins une rainure (25) étant disposée sur la face extérieure (46) du fond (15), et/ou au moins une rainure (25) étant disposée sur la face intérieure (47) dudit fond, et au moins une rainure (25) étant recouverte par une douille (22) et/ou par le coussinet de palier (8),
et/ou
le coussinet de palier (8) présente au moins une ouverture traversante (50) qui s'étend depuis la face extérieure (48) vers la face intérieure (49) et dans laquelle sont disposés au moins une butée et/ou, au moins en partie, au moins un élément amortisseur et/ou au moins un média d'amortissement,
et/ou
le coussinet de palier (8) présente, sur la face intérieure (49), au moins une rainure dans laquelle sont disposés au moins une butée et/ou, au moins en partie, au moins un élément amortisseur et/ou au moins un média d'amortissement.

2. Unité de palier selon la revendication 1,
**caractérisée en ce que**
au moins une douille (22) présentant une face extérieure (44) et une face intérieure (45) est disposée, au moins en partie, dans le coussinet de palier (8).

3. Unité de palier selon la revendication 1 ou selon la revendication 2,
**caractérisée en ce que**
une fente (39) est disposée entre un élément amortisseur (10, 13) situé dans une rainure (25) et ladite rainure (25).

4. Unité de palier selon l'une quelconque des revendications précédentes, **caractérisée en ce que**
au moins une rainure (25) contient au moins un média d'amortissement.

5. Unité de palier selon l'une quelconque des revendications précédentes, **caractérisée en ce que**
ladite unité de palier présente au moins un système de compensation destiné à la réception au moins temporaire d'au moins un média d'amortissement.

6. Unité de palier selon l'une quelconque des revendications précédentes, **caractérisée en ce que**
au moins un élément amortisseur (10, 13) est disposé dans une chambre (34).

7. Unité de palier selon l'une quelconque des revendications précédentes, **caractérisée en ce que**
au moins un élément amortisseur (10, 13) présente un ressort (32) et/ou une butée (33).

8. Unité de palier selon l'une quelconque des revendications précédentes, **caractérisée en ce que**
au moins une butée (36) est disposée de manière mobile dans la rainure (25).

9. Unité de palier selon l'une quelconque des revendications précédentes, **caractérisée en ce que**
ladite unité de palier présente au moins un espace de contre-pression.

10. Unité de palier selon l'une quelconque des revendications précédentes, **caractérisée en ce que**
ladite unité de palier est un amortisseur de vibrations et/ou un limiteur d'angle de rotation.

11. Procédé permettant d'utiliser une unité de palier présentant un coussinet de palier (8) qui présente une face extérieure (48) et une face intérieure (49) et dans lequel sont disposés, au moins en partie, au moins un fond (15) présentant une face extérieure (46) et une face intérieure (47) ainsi qu'au moins un palier (9), le fond (15) présentant au moins une rainure (25),
**caractérisé en ce que**
dans la rainure (25) sont disposés au moins une butée (36, 40, 41) et/ou, au moins en partie, au moins un élément amortisseur (10, 13) et/ou au moins un média d'amortissement, au moins une rainure (25) étant disposée sur la face extérieure (46) du fond (15), et/ou au moins une rainure (25) étant disposée sur la face intérieure (47) dudit fond, et au moins une rainure (25) étant recouverte par une douille (22) et/ou par le coussinet de palier (8),
et/ou
le coussinet de palier (8) présente au moins une ouverture traversante (50) qui s'étend depuis la face extérieure (48) vers la face intérieure (49) et dans laquelle sont disposés au moins une butée et/ou, au moins en partie, au moins un élément amortisseur et/ou au moins un média d'amortissement,
et/ou
le coussinet de palier (8) présente, sur la face intérieure (49), au moins une rainure dans laquelle sont disposés au moins une butée et/ou, au moins en partie, au moins un élément amortisseur et/ou au moins un média d'amortissement,
ce qui permet d'utiliser l'unité de palier comme limiteur d'angle de rotation puisqu'un angle de rotation que l'unité de palier permet d'effectuer à un composant relié à ladite unité de palier est limité par au moins une butée de fin de course, et/ou d'utiliser l'unité de palier comme amortisseur de vibrations puisqu'un mouvement de rotation que l'unité de palier permet d'effectuer à un composant relié à ladite unité de palier est amorti.

12. Procédé selon la revendication 11,
**caractérisé en ce que**
l'unité de palier est utilisée dans un palier de direction d'un véhicule.

13. Procédé selon la revendication 11 ou selon la revendication 12,
**caractérisé en ce que**
l'unité de palier utilisée est une unité de palier selon l'une quelconque des revendications 1 à 10.

14. Procédé permettant d'influencer la fonction d'une unité de palier présentant un coussinet de palier (8) qui présente une face extérieure (48) et une face intérieure (49) et dans lequel sont disposés, au moins en partie, un fond (15) présentant une face extérieure (46) et une face intérieure (47) ainsi qu'au moins un palier (9), le fond (15) présentant au moins une rainure (25),
**caractérisé en ce que**
dans la rainure (25) sont disposés au moins une butée (36, 40, 41) et/ou, au moins en partie, au moins un élément amortisseur (10, 13) et/ou au moins un média d'amortissement, au moins une rainure (25) étant disposée sur la face extérieure (46) du fond (15) et/ou au moins une rainure (25) étant disposée sur la face intérieure (47) dudit fond, et au moins une rainure (25) étant recouverte par une douille (22) et/ou par le coussinet de palier (8),
et/ou
le coussinet de palier (8) présente au moins une ouverture traversante (50) qui s'étend depuis la face extérieure (48) vers la face intérieure (49) et dans laquelle sont disposés au moins une butée et/ou, au moins en partie, au moins un élément amortisseur et/ou au moins un média d'amortissement,
et/ou
le coussinet de palier (8) présente, sur la face intérieure (49), au moins une rainure dans laquelle sont disposés au moins une butée et/ou, au moins en partie, au moins un élément amortisseur et/ou au moins un média d'amortissement,
ce qui permet d'utiliser l'unité de palier comme limiteur d'angle de rotation puisqu'un angle de rotation que l'unité de palier permet d'effectuer à un composant relié à ladite unité de palier est limité par au moins une butée de fin de course, et/ou d'utiliser l'unité de palier comme amortisseur de vibrations puisqu'un mouvement de rotation que l'unité de palier permet d'effectuer à un composant relié à ladite unité de palier est amorti,
l'angle de rotation étant influencé en sélectionnant une douille (22) appropriée dans laquelle est disposé au moins un élément amortisseur (10, 13), et/ou en sélectionnant un coussinet de palier (8) approprié dans lequel est disposé au moins un élément amortisseur,
et/ou
l'angle de rotation étant influencé en modifiant la position d'une butée (36, 40, 41) disposée dans une rainure (25),
et/ou
l'effet d'amortissement étant influencé en sélectionnant un média d'amortissement approprié,
et/ou
l'effet d'amortissement étant influencé en influant sur les propriétés d'un média d'amortissement par réchauffement, par refroidissement, grâce à au moins un champ magnétique et/ou grâce à au moins un champ électrique.

15. Procédé selon la revendication 14,
**caractérisé en ce que**
l'unité de palier utilisée est une unité de palier selon l'une quelconque des revendications 1 à 10, et/ou **en ce que** le procédé est utilisé dans un procédé permettant d'utiliser une unité de palier selon l'une quelconque des revendications 11 à 13.

16. Amortisseur de vibrations, en particulier amortisseur de vibrations pour un deux-roues,
- pourvu d'un coussinet de palier (8) qui présente une face extérieure (48) et une face intérieure (49) et dans lequel sont disposés, au moins en partie, un fond (15) présentant une face extérieure (46) et une face intérieure (47) ainsi qu'au moins un palier (9), le fond (15) présentant au moins une rainure (25),
**caractérisé en ce que**
dans la rainure (25) sont disposés au moins une butée (36, 40, 41) et/ou, au moins en partie, au moins un élément amortisseur (10, 13) et/ou au moins un média d'amortissement, au moins une rainure (25) étant disposée sur la face extérieure (46) du fond (15) et/ou au moins une rainure (25) étant disposée sur la face intérieure (47) dudit fond, et au moins une rainure (25) étant recouverte par une douille (22) et/ou par le coussinet de palier (8),
et/ou
le coussinet de palier (8) présente au moins une ouverture traversante (50) qui s'étend depuis la face extérieure (48) vers la face intérieure (49) et dans laquelle sont disposés au moins une butée et/ou, au moins en partie, au moins un élément amortisseur et/ou au moins un média d'amortissement,
et/ou
le coussinet de palier (8) présente, sur la face intérieure (49), au moins une rainure dans laquelle sont disposés au moins une butée et/ou, au moins en partie, au moins un élément amortisseur et/ou au moins un média d'amortissement.

17. Amortisseur de vibrations selon la revendication 16,
**caractérisé en ce que**
au moins une douille (22) présentant une face extérieure (44) et une face intérieure (45) est disposée, au moins en partie, dans le coussinet de palier (8).

18. Amortisseur de vibrations selon la revendication 16 ou selon la revendication 17,
**caractérisé en ce que**
au moins une rainure (25) est disposée sur la face extérieure (44) du fond (15), et/ou au moins une rainure (25) est disposée sur la face intérieure (45) dudit fond.

19. Amortisseur de vibrations selon l'une quelconque des revendications 16 à 18, **caractérisé en ce que**
au moins une rainure (25) est recouverte par une douille (22) et/ou par le coussinet de palier (8).

20. Amortisseur de vibrations selon l'une quelconque des revendications 16 à 19, **caractérisé en ce que**
une fente (39) est disposée entre un élément amortisseur (10, 13) situé dans une rainure (25) et ladite rainure (25).

21. Amortisseur de vibrations selon l'une quelconque des revendications 16 à 20, **caractérisé en ce que**
au moins une rainure (25) contient au moins un média d'amortissement.

22. Amortisseur de vibrations selon l'une quelconque des revendications 16 à 21, **caractérisé en ce que**
ledit amortisseur de vibrations présente au moins un système de compensation destiné à la réception au moins temporaire d'au moins un média d'amortissement.

23. Amortisseur de vibrations selon l'une quelconque des revendications 16 à 22, **caractérisé en ce que**
au moins un élément amortisseur (10, 13) est disposé dans une chambre (34).

24. Amortisseur de vibrations selon l'une quelconque des revendications 16 à 23, **caractérisé en ce que**
au moins un élément amortisseur (10, 13) présente un ressort (32) et/ou une butée (33).

25. Amortisseur de vibrations selon l'une quelconque des revendications 16 à 24, **caractérisé en ce que**
au moins une butée (36) est disposée de manière mobile dans la rainure (25).

26. Amortisseur de vibrations selon l'une quelconque des revendications 16 à 25, **caractérisé en ce que**
ledit amortisseur de vibrations présente au moins un espace de contre-pression.

27. Amortisseur de vibrations selon l'une quelconque des revendications 16 à 26, **caractérisé en ce que**
ledit amortisseur de vibrations présente une unité de palier selon l'une quelconque des revendications 1 à 10.

28. Procédé permettant d'utiliser un amortisseur de vibrations présentant un coussinet de palier (8) qui présente une face extérieure (48) et une face intérieure (49) et dans lequel sont disposés, au moins en partie, un fond (15) présentant une face extérieure (46) et une face intérieure (47) ainsi qu'au moins un palier (9), le fond (15) présentant au moins une rainure (25),
**caractérisé en ce que**
dans la rainure (25) sont disposés au moins une butée (36, 40, 41) et/ou, au moins en partie, au moins un élément amortisseur (10, 13) et/ou au moins un média d'amortissement, au moins une rainure (25) étant disposée sur la face extérieure (46) du fond (15), et/ou au moins une rainure (25) étant disposée sur la face intérieure (47) dudit fond, et au moins une rainure (25) étant recouverte par une douille (22) et/ou par le coussinet de palier (8),
et/ou
le coussinet de palier (8) présente au moins une ouverture traversante (50) qui s'étend depuis la face extérieure (48) vers la face intérieure (49) et dans laquelle sont disposés au moins une butée et/ou, au moins en partie, au moins un élément amortisseur et/ou au moins un média d'amortissement,
et/ou
le coussinet de palier (8) présente, sur la face intérieure (49), au moins une rainure dans laquelle sont disposés au moins une butée et/ou, au moins en partie, au moins un élément amortisseur et/ou au moins un média d'amortissement, de sorte qu'un angle de rotation que l'amortisseur de vibrations permet d'effectuer à un composant relié audit amortisseur de vibrations est limité par au moins une butée de fin de course, et/ou de sorte qu'un mouvement de rotation que l'amortisseur de vibrations permet d'effectuer à un composant relié audit amortisseur de vibrations est amorti.

29. Procédé selon la revendication 28,
**caractérisé en ce que**
l'amortisseur de vibrations est utilisé dans un palier de direction d'un véhicule.

30. Procédé selon la revendication 28 ou selon la revendication 29,
**caractérisé en ce que**
l'amortisseur de vibrations utilisé est un amortisseur de vibrations selon l'une quelconque des revendications 16 à 27.

31. Procédé permettant d'influencer la fonction d'un amortisseur de vibrations présentant un coussinet de palier (8) qui présente une face extérieure (48) et une face intérieure (49) et dans lequel sont disposés, au moins en partie, un fond (15) présentant une face extérieure (46) et une face intérieure (47) ainsi qu'au moins un palier (9), le fond (15) présentant au moins une rainure (25), **caractérisé en ce que**
dans la rainure (25) sont disposés au moins une butée (36, 40, 41) et/ou, au moins en partie, au moins un élément amortisseur (10, 13) et/ou au moins un média d'amortissement, au moins une rainure (25) étant disposée sur la face extérieure (46) du fond (15), et/ou au moins une rainure (25) étant disposée sur la face intérieure (47) dudit fond, et au moins une rainure (25) étant recouverte par une douille (22) et/ou par le coussinet de palier (8),
et/ou
le coussinet de palier (8) présente au moins une ouverture traversante (50) qui s'étend depuis la face extérieure (48) vers la face intérieure (49) et dans laquelle sont disposés au moins une butée et/ou, au moins en partie, au moins un élément amortisseur et/ou au moins un média d'amortissement,
et/ou
le coussinet de palier (8) présente, sur la face intérieure (49), au moins une rainure dans laquelle sont disposés au moins une butée et/ou, au moins en partie, au moins un élément amortisseur et/ou au moins un média d'amortissement, de sorte qu'un angle de rotation que l'amortisseur de vibrations permet d'effectuer à un composant relié audit amortisseur de vibrations est limité par au moins une butée de fin de course, et/ou de sorte qu'un mouvement de rotation que l'amortisseur de vibrations permet d'effectuer à un composant relié audit amortisseur de vibrations est amorti, l'angle de rotation étant influencé en sélectionnant une douille (22) appropriée dans laquelle est disposé au moins un élément amortisseur (10, 13), et/ou en sélectionnant un coussinet de palier (8) approprié dans lequel est disposé au moins un élément amortisseur,
et/ou
l'angle de rotation étant influencé en modifiant la position d'une butée (36, 40, 41) disposée dans une rainure (25),
et/ou
l'effet d'amortissement étant influencé en sélectionnant un média d'amortissement approprié,
et/ou
l'effet d'amortissement étant influencé en influant sur les propriétés d'un média d'amortissement par réchauffement, par refroidissement, grâce à au moins un champ magnétique et/ou grâce à au moins un champ électrique.

32. Procédé selon la revendication 31,
**caractérisé en ce que**
l'amortisseur de vibrations utilisé est un amortisseur de vibrations selon l'une quelconque des revendications 16 à 27, et/ou **en ce que** le procédé est utilisé dans un procédé permettant d'utiliser un amortisseur de vibrations selon l'une quelconque des revendications 28 à 30.
